(19) **Europäisches Patentamt**

**European Patent Office**

**Office européen des brevets**

(11) **EP 0 978 771 B1**

(12) **EUROPEAN PATENT SPECIFICATION**

(45) Date of publication and mention
of the grant of the patent:
**20.10.2004 Bulletin 2004/43**

(51) Int Cl.$^7$: **G05B 19/042**

(21) Application number: **99115356.0**

(22) Date of filing: **03.08.1999**

(54) **Telecontrol device and method**

Vorrichtung und Verfahren zur Fernsteuerung

Dispositif et procédé de télécommande

(84) Designated Contracting States:
**AT BE CH CY DE DK ES FI FR GB GR IE IT LI LU
MC NL PT SE**

(30) Priority: **07.08.1998 IT TO980696**

(43) Date of publication of application:
**09.02.2000 Bulletin 2000/06**

(73) Proprietor: **Ansaldo Segnalamento Ferroviario
S.p.A.
85050 Tito (IT)**

(72) Inventors:
• **Castagneto Gianluigi c/o Ansaldo Segnalamento
16129 Genova (IT)**

• **Torre Eugenio c/o Ansaldo Segnalamento
16129 Genova (IT)**

(74) Representative: **Cerbaro, Elena, Dr. et al
STUDIO TORTA S.r.l.,
Via Viotti, 9
10121 Torino (IT)**

(56) References cited:
| | |
|---|---|
| **EP-A- 0 445 826** | **WO-A-97/11415** |
| **JP-A- 10 171 677** | **US-A- 4 560 936** |
| **US-A- 4 747 048** | **US-A- 5 485 620** |
| **US-A- 5 757 643** | **US-A- 5 789 887** |
| **US-A- 5 815 659** | |

**Description**

The present invention refers to a telecontrol device and method.

Telecontrol devices are known in which the central unit (for example a computer) sends through a transmission channel (for example a telephone line, an optic fiber line, a radio bridge, etc.), telecontrol messages towards one (or more) peripheral units (for example realized through a computer) which is adapted to realize, depending on the received message, the control of a physical device. Such a telecontrol device is known by US-5,757,643.

The use of such telecontrol devices is widely known in the railway field in which a central unit controls a plurality of peripheral units adapted to realize the control of physical devices (for example signaling devices, points, level crossings, etc.) used to regulate train circulation.

The major requirement requested from telecontrol devices is realizing such a high safety that the controller really realized on the physical device exactly corresponds to what is required by the central unit.

For that purpose it must be noted how known telecontrol devices do not generally realize intrinsic safety systems, that is systems that in case of failure and/or malfunction are necessarily set into a condition in which the physical device control, even when wrongly performed, guarantees a safety situation.

On the contrary, in the control devices of the known type failures and/or errors can occur compromising the safety operation of the telecontrol device. For such purpose it can be noted that a failure and/or an error in a telecontrol device of a know type can occur

*    in the hardware and/or software structure of the central unit;
*    in the transmission channel; and
*    in the hardware and/or software structure of the peripheral unit.

To solve known telecontrol device inconveniences, related to failures and/or errors in the hardware or software structure of the peripheral unit, redundant systems have been proposed in which a physical device activation in the peripheral unit is performed only when two (or more) control signals are present and are mutually in agreement.

Systems have also been proposed in which the peripheral unit is equipped with a supervising circuit (watch dog) continually controlling the good operation of the peripheral unit itself and that, when a detected failure and/or a malfunction is present, stops the peripheral unit supply making *de facto* impossible any physical device activation.

Such telecontrol devices anyway do not completely satisfy the strict safety requirements required in some technical fields (for example in the railways one) since failure, for example regarding peripheral units software or hardware can make the precautions preset to guarantee the safety inefficient.

Object of the present invention is realizing a telecontrol device which overcomes the known telecontrol devices inconveniences guaranteeing, for every use situation, a high safety.

The previous object is obtained by the present invention as it is related to a telecontrol device of the type disclosed in claim 1.

The present invention is also related to a telecontrol method of the type disclosed in claim 24. The invention will now be described with references to the enclosed drawings that show a non-limiting embodiment thereof, in which:

*    Figure 1 diagramatically shows a telecontrol device realized according to the teachings of the present invention;
*    Figures 2a, 2b show a logical operating diagram of a computing unit of the device in figure 1;
*    Figure 3 details a first block of figures 2a, 2b;
*    Figure 4 details a second block of figures 2a, 2b; and
*    Figure 5 show a variation of the device shown in Figure 4.

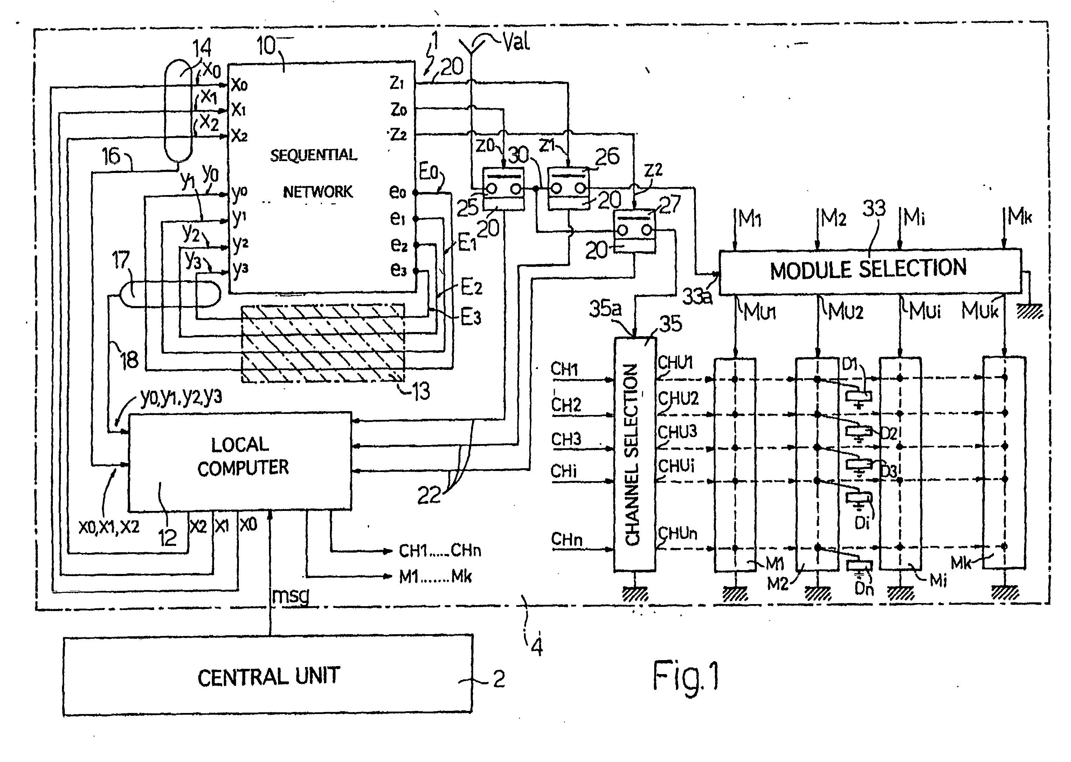

In Figure 1 a telecontrol device is designated as 1, as a whole, in which a central control unit 2 controls one (or more) peripheral units 4. In particular, each peripheral unit 4 comprises an electromechanical or electronic circuit 10 which realizes, as a whole, a sequential switching circuit indicated in the present document sequential network cooperating with a local computer 12 of the peripheral unit.

The sequential network 10 has first inputs $x_0$, $x_1$, $x_2$, called primary elements which are adapted to receive respective input signals $X_0$, $X_1$, $X_2$ coming from the local computer 12, called primary input signals or more simply primary inputs. In the shown embodiment, three primary inputs are shown; it is anyway clear that the number of primary inputs can be any one.

The sequential network 10 has first outputs $z_0$, $z_1$, $z_2$ on which respective output signals $Z_0$, $Z_1$, $Z_2$ can be detected, called primary output signals or more simply primary outputs. In the shown embodiment three primary outputs are shown; it is anyway clear that the number of primary outputs can be any one.

The sequential network 10 also has a plurality of secondary outputs $e_0$, $e_1$, $e_2$, $e_3$ on which respective signals $E_0$, $E_1$, $E_2$, $E_3$ are present which are transferred, through feedback loops 13 (diagramatically shown) possibly containing delay circuits (not shown) and amplifier circuits (not shown), towards respective second inputs of circuit 10 on which secondary inputs signals Y0, Y1, Y2, Y3, are present, that are also simply called secondary inputs.

The feedback loops 13 has the features according to which a time interval is necessary upon the occurrence of an excitation, that is a state variation on a secondary output e0, e1, e2, e3, and the state variation of the secondary inputs Y0, Y1, Y2, Y3.

For such reason the signals being present on secondary outputs, also called excitations, are designed as E0, E1, E2, E3 while the secondary inputs are designed as Y0, Y1, Y2, Y3.

In particular, when the excitation Eh of a generic h-th secondary input Yh has the same value of its current state (Yh = Eh), the following value of the secondary inputs will be equal to the current one and its state is called stable.

When instead the excitation Eh of a generic h-th secondary input Yh has a value different from its current state (Yh different from Eh) the following value of the secondary inputs will be different from the current one and its state is called unstable.

As is known, in a sequential network, the primary output values at a certain time To are function of the primary inputs values at the same time To and of the sequence of primary input signals that occurred in circuit 10 before such time To.

The network 10 in fact can be set, in response to a sequence of primary inputs coming from a local computer 12, in a certain number of internal configurations, called internal sequential network states.

The network 10 therefore is set, following a sequence of primary inputs, in a certain internal state; for such reason it is usual to say that network 10 is equipped with "memory" since it "remembers" a sequence of primary inputs and is set in a certain internal state depending on such sequence.

It must be further noted that, like primary inputs, secondary inputs, primary outputs, and excitations has a binary value (0 or 1).

As is known a sequential network can be described through a flow table TF that has a plurality of boxes, each one of which corresponds to an internal network state; such flow table further expresses the relation linking the primary inputs X0, X1, X2, the secondary inputs Y0, Y1, Y2, Y3 and the primary outputs Z0, Z1, Z2.

In particular, the following can be noted in the flow table TF:

* internal network states are located through numbers - every TF table box corresponds to an internal state shown by a respective integer number;

internal states are able to be divided into stable internal states designed by numbers enclosed within brackets (for example (7) = seventh stable state) and unstable internal states shown by numbers not enclosed by brackets (for example (3) = third unstable state). An internal network state is called stable when, for such state, excitations are equal to secondary inputs. An internal state is instead called unstable when, for such state, excitations are different from secondary inputs.

* following reaching an unstable internal state, network 10 is automatically set to the corresponding stable internal state;
* the flow table TF has as many columns as the possible binary configurations of primary inputs are (in the present case number of primary inputs 3, number of columns $2^3=8$).
* the flow table TF has a plurality of lines each of which includes at least one stable internal state;
* if a certain state appears in a column in an unstable way, in the same column the same state must appear in a stable way;
* it is further allowed that primary inputs can change only one at a time;
* a primary inputs configuration change corresponds to an horizontal displacement on table TF;
* a vertical displacement on table TF instead corresponds to a secondary inputs state change.

Purely as a non-limiting example, a table TF is shown that can be realized by the sequential network 10; it is obviously clear that tables having different arrangements and/or different sizes (lines and columns) are possible.

It is known to the skilled person in the art, given the TF table, how to realize a physical circuit (for example realized through relays) that realizes the TF table.

| Secondary inputs | Primay inputs X2, X1, X0 | | | | | | | | Outputs | | |
|---|---|---|---|---|---|---|---|---|---|---|---|
| Y3,Y2,Y1,Y0 | 000 | 001 | 011 | 010 | 110 | 111 | 101 | 100 | Z2 | Z1 | Z0 |
| 0,0,0,0 | (1) | 2 | 9 | 10 | 11 | 12 | 13 | 14 | 0 | 0 | 0 |
| 0,1,0,0 | 15 | (2) | 3 | 10 | 11 | 12 | 13 | 14 | 0 | 0 | 0 |

(continued)

| Secondary inputs | Primay inputs X2, X1, X0 | | | | | | | | Outputs | | |
|---|---|---|---|---|---|---|---|---|---|---|---|
| Y3,Y2,Y1,Y0 | 000 | 001 | 011 | 010 | 110 | 111 | 101 | 100 | Z2 | Z1 | Z0 |
| 1,1,0,0 | 15 | 16 | (3) | 4 | 11 | 12 | 13 | 14 | 0 | 1 | 1 |
| 1,0,0,0 | 15 | 16 | 9 | (4) | 5 | 12 | 13 | 14 | 0 | 0 | 1 |
| 1,0,1,0 | 1 | 16 | 9 | 10 | (5) | 12 | 13 | 6 | 1 | 0 | 1 |
| 1,0,1,1 | 15 | 16 | 9 | 10 | 11 | 12 | 7 | (6) | 0 | 0 | 0 |
| 1,1,1,1 | 15 | 16 | 9 | 10 | 11 | 8 | (7) | 14 | 0 | 0 | 0 |
| 0,1,1,1 | 1 | 16 | 9 | 10 | 11 | (8) | 13 | 14 | 1 | 1 | 1 |
| 0,0,0,1 | 1 | (16) | (9) | (10) | (11) | (12) | (13) | (14) | 0 | 0 | 0 |
| 0,1,0,1 | (15) | 16 | 9 | 10 | 11 | 12 | 13 | 14 | 0 | 0 | 0 |

The local computer 12 further receives as inputs:

* primary inputs X0, X1, X2 fetched through a transducer 14 (diagramatically shown) and transported to computer 12 through a data line 16;
* secondary inputs Y0, Y1, Y2, Y3 fetched through a transducer 17 (diagramatically shown) and transported to computer 12 through a data line 18; and
* primary outputs Z0, Z1, Z2, fetched through transducers 20 (diagramatically shown) and transported to computer 12 through data lines 22.

Primary outputs Z0, Z1, Z2 are adapted to control respective switching devices 25, 26 and 27 (diagramatically shown) of the normally open type that are suitably realized through relays; in particular, when the primary output value is equal to a logic "0", the switching device associated thereto is open, while when the primary output value is equal to a logic "1" the switching device associated thereto is closed.

Conveniently transducers 20 are realized by second relays contacts 25, 26 and 27 each one of which is a multiple-contact relay with forced (or safety) guides comprising a first mobile contact (not shown) that realizes, depending on its position, opening/closing of switch 25, 26 and 27 and a second mobile contact (not shown), mechanically integral with the first contact, whose position defines the state (zero or one) of an output Z0, Z1 and Z2.

The switch 25 has a first terminal communicating with a voltage source Va1 and a second terminal communicating with a first terminal of the switching device 26 through an electric line 30. The switching device 26 has a second terminal communicating with a supply and/or activation input 33a of a module selecting device 33 whose function will be described below.

The switching device 27 has a first terminal communicating with line 30 and a second terminal communicating with a supply and/or activation input 35a of a channel selecting device 35.

The channel selecting device 35 has a plurality of inputs (whose number is n) adapted to receive respective signals CH1, CH2, CH3, .... CHn for the respective first, second, third ... and n-th channel selection.

Preferably, but not exclusively, the channel selection signal has a binary value and next to a logical "0" the respective channel selection is disabled, while next to a logic "1" the respective channel selection is disabled.

When the channel selecting device 35 is activated or supplied, next to an i-th channel selection signal CHi as input, a corresponding output signal CHUi is produced having a logic value that is in compliance with the logic value of the input channel selecting signal.

When the channel selecting device 35 is not activated nor supplied, next to an input channel selection signal CHi no output signal is produced.

In this way, the channel selecting device 35 has a plurality of outputs (whose number is n) on which respective output signals CHU1, CHU2, CHU3, ... CHUn can appear that are sent to a plurality of supply modules M1, M2, Mi, ... Mk to control the modules themselves.

Each module M thereby receives as inputs the n control signals CHU1, CHU2, CHU3, ... CHUn coming from the channel control device 35.

Each module M, when it is activated and/or supplied, is further adapted to control a plurality of n physical devices D1, D2, ... Dn each one of which is associated with a respective control signal CHU1, CHU2, CHU3, ... CHUn coming from the channel selecting device 35.

In particular, every device D1, D2, ... Dn has a first state, in particular an activation state, if the respective control signal CHU1, CHU2, CHU3, ... CHUn associated therewith is equal to a logic "1", while it has a second state, in particular an activation state, when the respective control signal CHU1, CHU2, CHU3, ... CHUn associated therewith is equal to a logic "0".

In this way, if an i-th device Di of an i-th module Mi supplied and/or active is composed of a light signalling device, such signalling device is on when the related control signal CHUi has value "1" (next to a channel selecting signal CHi equal to a logic "1"), while the light signalling device is off when the related control signal CHi has value "0" (next to a selection channel signal CHi equal to a logic "0").

The module selecting device 33 has a plurality of inputs (whose number is k) adapted to receive respective signals M1, M2, Mi, ... Mk to activate respective first, second, i-th ... and k-th modules M1, M2, Mi, ... Mk.

Preferably, but not exclusively, each module activation signal has a binary value and next to a logic "0" the activation and/or supply of the respective module is disabled while next to a logic "1" the activation and/or supply of the respective module is performed.

When the module selecting device 33 is activated and/or supplied, next to an i-th input module selection signal Mi, a corresponding output signal MUi is created that has a logic value in compliance with a logic value of the input module selection signal.

When the module selecting device 33 is not activated nor supplied, next to an input module selection signal Mi, no output signal is produced.

In this way, to activate an i-th device Di belonging to an i-th module Mi and to an i-th channel, it is necessary to:

* activate and/or supply the module selecting device 33;
* apply a module selection signal Mi equal to a logic "1";
* activate and/or supply the channel selecting device 35; and
* apply a channel selection signal CHi equal to a logic "1".

If one between module selecting device 33 and channel selecting device 35 is deactivated and/or not supplied, it is not possible to activate any physical device D of any module M.

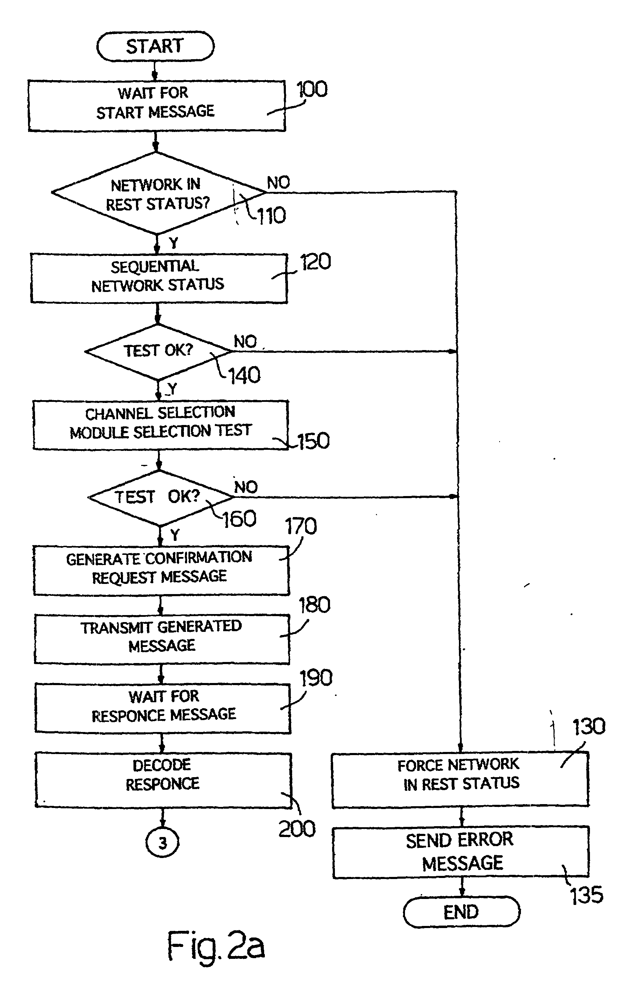

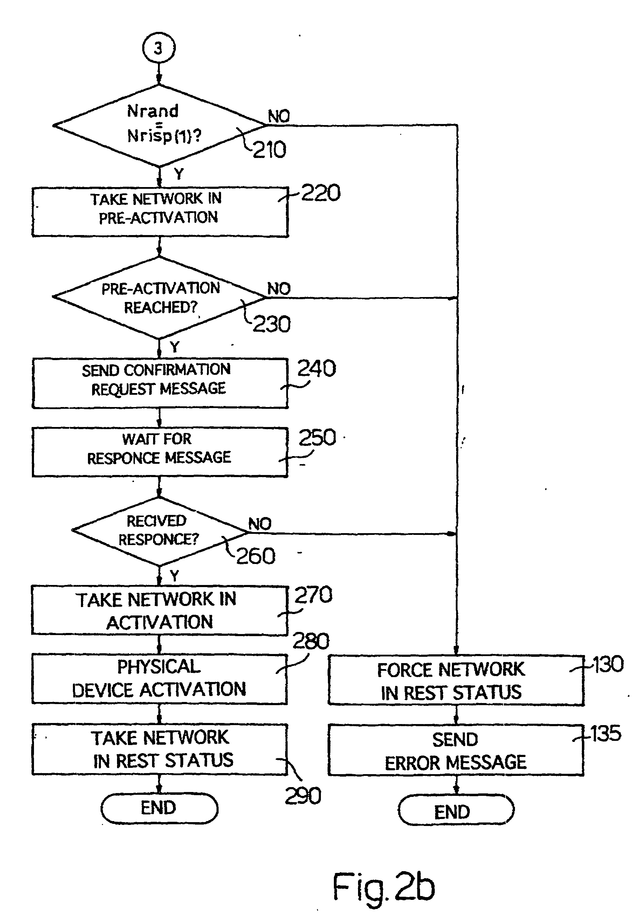

With reference to figures 2a, 2b, a logical operation diagram of local computer 12 cooperating with the sequential network 10 is shown.

Initially, a block 100 is reached in which a start message is waited for, coming from the central unit 2. The start message is associated with a coded portion msg identifying a specific telecontrol device Di (defined by a respective module and by a respective channel) to be actuated.

After having received such start message, block 100 is followed by block 110 which checks whether the sequential network 10 is in a rest state; the rest state is recognized when all primary outputs are null, that is:

Z0 = 0;
Z1 = 0; and
Z2 = 0;

and simultaneously all the excitations are also null, that is:

E0 = 0;
E1 = 0;
E2 = 0; and
E3 = 0.

Any arrangement of primary outputs or excitations that is different from the previous one corresponds to a different state from the rest one.

If the rest state is detected, block 110 is followed by block 120, otherwise (undetected rest state) block 110 is followed by block 130 (detailed below).

Block 120 (detailed below) performs a test to check the good operation of the sequential network 10 and it is followed by block 140 that examines the result of such test; in case of a negative result (not correctly operating sequential network 10) block 140 is followed by block 130, otherwise (sequential network 10 recognized as correctly operating) block 140 is followed by block 150.

Block 150 (detailed below) performs a test to check the good operation of channel selecting device 35 and of module selecting device 33 and is followed by block 160 that examines the result of such test; in case of a negative result (module selecting device 33 and/or channel selecting device 35 not correctly operating) block 160 is followed by block 130, otherwise (module selecting device 33 and channel selecting device 35 both recognized as correctly operating) block 160 is followed by block 170.

As will be cleared below, when performing the test of block 150, the local computer 12 generates a sequence of primary inputs so that the sequential network 10 is arranged in an internal state different from the rest state.

Block 170 generates a random number Nrand and associates (in a known way) such random number to received message msg, thereby generating a confirmation request message msg-conf.

Block 170 is followed by block 180 that transmits the confirmation request message msg-conf to the central unit 2.

Block 180 is followed by block 190 that is set waiting for a response message coming from the central unit 2 in response to the confirmation request message msg-conf previously transmitted.

Following the reception of a response message msg-risp coming from the central unit 2 within a maximum time preset by the emission of the confirmation request massage, block 190 is followed by block 200 that decodes the response message msg-risp extracting therefrom a number Nrisp(1) that has been manually inserted by an operator that controls the central unit 2 and that has been associated with a response message.

Block 200 is followed by block 210 that checks whether a relation exist, for example an equality one, between random number Nrand generated by block 170, and number Nrisp (1) that has been manually introduced by an operator in response to the confirmation request message coming from the peripheral unit 4.

Preferably, but not exclusively, block 210 checks whether Nrand = Nrisp(1); if the result is negative (Nrand different from Nrisp(1)), that is the random number generated by the peripheral unit 4 is different from the number manually inserted by the operator in the central unit 2, block 130 is selected, otherwise (Nrand = Nrisp, that is random number generated by peripheral unit 4 equal to the number manually inserted by the operator in central unit 2) block 220 is selected.

Block 220, whose meaning will be clarified afterwards, takes the sequential network 10 into a pre-activation state (internal state (7)) next to an activation state (internal state (8)) for which all primary outputs have logic value 1 (Z0 = 1; Z1 = 1; Z2 = 1) and at least one physical device D can be activated.

Block 220 is followed by block 230 that checks whether network 10 is set into the pre-activation state after having received a correct sequence of primary inputs generated by the local computer 12; if the result is negative (wrong sequence of primary inputs and/or network not set into the pre-activation state) block 230 is followed by block 130, otherwise (network in the pre-activation state following a correct sequence of primary inputs being received) block 230 is followed by block 240.

Block 240, similarly to what block 180 does, resends the confirmation request message msg-conf to the central unit 2.

Block 240 is followed by block 250 (similar to block 190) that is set waiting for a message coming from the central unit 2 in response to the confirmation request message msg-conf previously transmitted from block 240.

Following the reception of a response message msg-risp coming from the central unit 2, block 250 is followed by block 260.

Block 260 checks whether the response message has been received in a preset time; if the answer is negative block 130 is selected, otherwise (response message received within a preset time) block 270 is selected.

Block 270, whose meaning will be clarified below, takes the sequential network 10 from the pre-activation state (internal state (7)) to the activation (internal state (8)) next to which all primary outputs have logic value 1 (Z0 = 1; Z1 = 1; Z2 = 1) and at least one physical device D can be activated.

After the network passage to the activation state block 270 is followed by block 280 that waits for the activation of at least one physical device D.

After the activation and the following deactivation of a physical device D, block 280 is followed by block 290 that forces network 10 in the rest state. The described operations thereby end.

Similarly, block 130 too forces the network in the rest state so that all primary outputs are null (Z0 = 0; Z1 = 0; Z2 = 0) and simultaneously all excitations are also null (E0 = 0; E1 = 0; E2 = 0).

Block 130 is then followed by a block 135 that sends to the central unit 2 an error message; such error message is displayed so that the operator is immediately aware of a correct operation of the telecontrol device 1. The described operations thereby end.

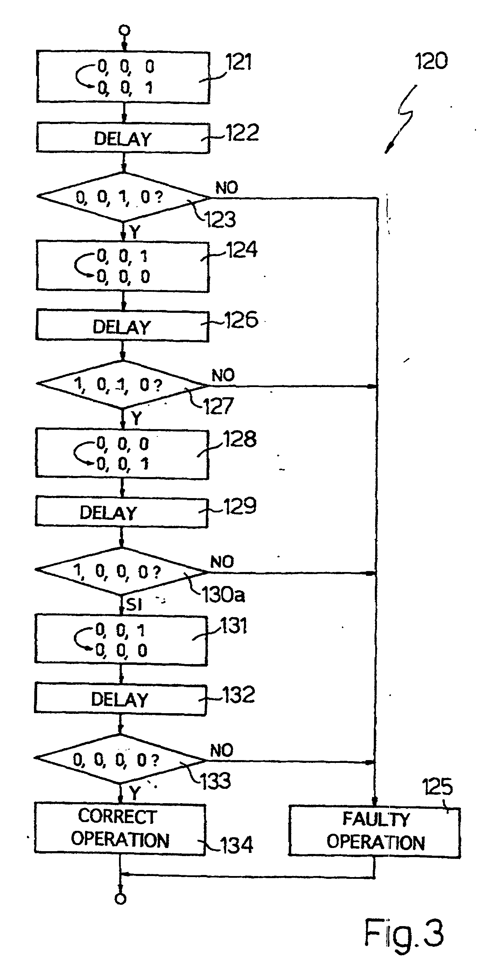

With particular reference to figure 3 the detail of block 120 is shown that performs a check to control the good operation of sequential network 10.

In particular, block 120 comprises a starting block 121 that controls a transition of primary inputs taking primary inputs from X2 = 0; X1 = 0; X0 = 0 to X2 = 0; X1 = 0; X0 = 1. Such transition corresponds to an horizontal movement on table TF with passage from stable state (1) to unstable state 2; from unstable state 2 than the displacement is to the stable state (2) with a vertical movement on the second column. Secondary inputs must correspond to the stable state (2) that are equal to Y0 = 0; Y1 = 0; Y2 = 1; Y3 = 0 (see enclosed table).

Block 121 is followed by a delay block 122 that is followed by a block 123 that checks whether secondary inputs are effectively moved to values Y0 = 0; Y1 = 0; Y2 = 1; Y3 = 0 as described in the table; if the result is positive block 123 is followed by block 124, otherwise from block 123 the displacement is to block 125.

Block 124 controls a further transition of primary inputs taking primary inputs from X2 = 0; X1 = 0; X0 = 1 to X2 = 0; X1 = 0; X0 = 0. Such transition corresponds to an horizontal displacement on table TF passing from the stable state (2) to the unstable state 15; then passing from the unstable state 15 to the stable state (15) with a vertical displacement on the first column. The stable state (15) must correspond to secondary inputs similar to Y0 = 1; Y1 = 0; Y2 = 0; Y3 = 0 (see enclosed table).

Block 124 is followed by a delay block 126 that in turn is followed by a block 127 that checks whether secondary inputs are really set to values Y0 = 0; Y1 = 0; Y2 = 1; Y3 = 0 are described in the table; if the result is positive block 127 is followed by block 128, otherwise from block 127 movement is done to block 125.

Block 128 controls a further transition of primary inputs taking primary inputs from X2 = 0; X1 = 0; X0 = 0 to X2 = 0; X1 = 0; X0 = 1. Such transition corresponds to an horizontal displacement in table TF, passing from stable state (15) to unstable state 16; from unstable state 16 a displacement is made to stable state (16) with a vertical displacement on the second column. The stable state (16) must correspond to secondary inputs such as Y0 = 1; Y1 = 0; Y2 = 0; Y3 = 0 (see the enclosed table).

Block 128 is followed by a delay block 129 that is followed by a block 130a that checks whether secondary inputs have been effectively set to values Y0 = 1; Y1 = 0; Y2 = 0; Y3 = 0 as described by the table; if the result is positive block 130a is followed by block 131, otherwise from block 130a movement is done to block 125.

Block 131 controls a further transition of primary inputs taking primary inputs from X2 = 0; X1 = 0; X0 = 1 to X2 = 0; X1 = 0; X0 = 0. Such transition corresponds to an horizontal displacement in table TF, passing from stable state (16) to unstable state 1; and passing from unstable state 1 to stable state (1) with a vertical displacement on the first column. The stable state (1) must correspond to secondary inputs equal to Y0 = 0; Y1 = 0; Y2 = 0; Y3 = 0 (see the enclosed table).

Block 131 is followed by a delay block 132 that in turn is followed by a block 133 that checks whether secondary inputs have been effectively set to values Y0 = 0; Y1 = 0; Y2 = 0; Y3 = 0 as described in the table; if the result is positive block 133 is followed by block 134, otherwise from block 133 movement is done to block 125.

Block 134 detects and records a correct operation of the sequential network 10 while block 125 detects a failure and/or a faulty operation of sequential network 10. Data detected by blocks 134 and 125 are analysed by block 140 (figures 2a, 2b)

In this way, through the operations of block 120, the sequential network 10 is forced by local computer 12 to "respond" to a sequence of primary inputs, and following each variation of primary inputs it is checked whether the network 10 reaches the desired internal status and the secondary inputs values are in compliance with the performed state transition. In other words, it is checked whether the network behaves according with what is provided in table TF, that is, it correctly operates.

Such test is further realized without activating the outputs, that is during the test no output has a primary value equal to a logic 1 (see primary outputs values related to first, second, third, ninth, and tenth line of table TF).

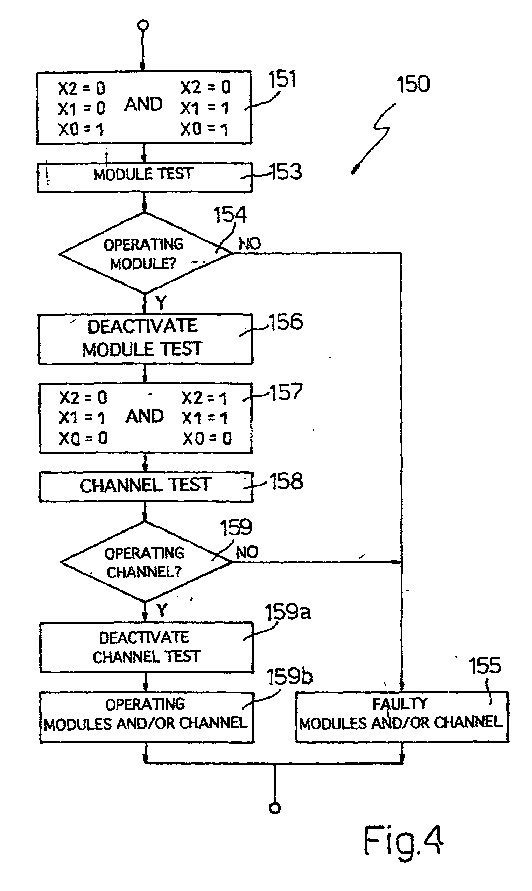

With particular reference to figure 4, the detail of block 150 is shown that performs, under the control of local computer 12, a test to check the good operation of channel selecting device 35 and of module selecting device 33.

Block 150 comprises an initial block 151 that forces primary inputs from X2 = 0; X1 = 0; X0 = 0 to X2 = 0; X1 = 0; X0 = 1.

Such transition corresponds to an horizontal displacement on table TF passing from stable state (1) to unstable state 2; and from unstable state 2 to stable state (2) with a vertical displacement on the second column.

Block 151 further controls a transition of primary inputs from X2 = 0; X1 = 0; X0 = 0 to X2 = 0; X1 = 1; X0 = 1.

Such transition corresponds to an horizontal displacement on table TF passing from stable state (2) to unstable state 3; and from unstable state 3 to stable state (3) with a vertical displacement on the third column.

The stable state (3) corresponds to primary outputs having a logic value equal to:

Z2 = 0;
Z1 = 1; and
Z0 = 1.

Output Z2 = 1 is further applied to the switching device 27, output Z1 = 1 is further applied to the switching device 26, output Z0 = 1 is further applied to the switching device 25.

In this way the switching device 27 remains open and the switching device 26 and 25 are closed allowing the supply and/or activation of module selecting device 33.

Simultaneously, since the switching device is open, the channel selecting device 35 is not supplied and/or inactive. Therefore no physical selecting device D can be activated but the module selecting device 33 that is supplied and/or active can be tested.

For such purpose block 151 is followed by a block 153 that sends as input to device 33, in a test mode, signals M1, M2, M3, ... Mk to activate respective first, second, third, ... and k-th modules M1, M2, M3, ... Mk.

Block 153 is followed by a block 154 that checks whether for every input test signal M1, M2, M3, ... Mk, the activation of the relative module really occurred, that is whether the module correctly operates for the device Di command.

In particular, such check operation can be performed by verifying the final switching device closure (not shown) arranged in the different modules; every final switching device being adapted to close if the module to which it is coupled is active and being adapted to supply a device Di if the related channel for such device is also active.

In case an error is detected in at least one module, that is a test module activated by a respective input test signal to the device 33 in practice is not activated, block 154 is followed by block 155, otherwise (each module activated through a respective input test signal to device 33 - no error detected when activating modules) block 154 is followed by block 156 that deactivates the above-said module test mode.

Block 156 is followed by block 157 that controls a primary input transition from X2 = 0; X1 = 1; X0 = 1 to X2 = 0; X1 = 1; X0 = 0.

Such transition corresponds to an horizontal displacement on table TF passing from stable state (3) to unstable state 4; and from unstable state 4 to stable state (4) with a vertical displacement on the fourth column.

Block 157 further controls a primary input transition from X2 = 0; X1 = 1; X0 = 0 to X2 = 1; X1 = 1; X0 = 0.

Such transition corresponds to an horizontal displacement on table TF passing from stable state (4) to unstable state 5; and from unstable state 5 to stable state (5) with a vertical displacement on the fifth column.

Stable state (5) corresponds to primary outputs having a logic value equal to:

Z2 = 1;
Z1 = 0; and
Z0 = 1.

Output Z2 = 1 is further applied to the switching device 27, output Z1 = 0 is further applied to the switching device 26, output Z0 = 1 is further applied to the switching device 25.

In this way the switching device 27 is closed, the switching device 25 is closed and the switching device 26 is open.

Switching devices 25 and 27 (closed) allow supplying and/or activating the channel selecting device 35 while the module selecting device 33 is not supplied and/or deactivated.

Therefore no physical selection device D can be activated but the channel selecting device 35 that is supplied and/or active can be tested.

For such purpose block 157 is followed by block 158 that sends, in a test mode, signals CH1, CH2, CH3, ... CHn for the activation of respective first, second, third, ... and n-th channels.

Block 158 is followed by block 159 that checks if for each input test channel activation signal CH1, CH2, CH3, ... CHn, a corresponding output signal CHU1, CHU2, CHUn reaches each modulus, that is whether all channels are active and operating.

In case an error is detected on at least one channel, that is at least one output signal CHUi has not been produced in a compliant way in response to an input signal to the channel selecting device 35, block 159 is followed by block 155, otherwise (for each input signal the channel selecting device 35 produces as output a respective congruent signal CHU, that reaches, for that channel, all modules - all channels are operating) block 159 is followed by block 159a that deactivates the above-said channel test mode.

Block 159a is followed by block 159b that detects the good result of the operations in block 150 (module selecting device 33 and channel selecting device 35 both operating).

Block 155 detects a negative result of operations of block 150 (module selecting device 33 and/or channel selecting device 35 not operating or faulty).

Blocks 159b and 155 are followed by block 160 that examinates the test result of block 150.

During use, after a command from a central unit 2, the sequential network arrangement is checked in its rest state (block 110) and the check step (block 120) is performed about the correct operation of the sequential network itself.

As previously shown with reference to figure 3, the check step for the correct operation includes performing a plurality of transitions under the control of the local computer 12, that starting from state (1) takes the network to state (2), to state (15), to state (16) and then again to state (1).

If the above mentioned transitions are performed in the provided sequence depending on the primary input variations and the sequential network is consequently recognized as correctly operating the test about the good operation of the channel selecting device 35 and of the module selecting device 33 is performed.

For such purpose, as shown with reference to figure 3, the sequential network is taken, after a command coming from the local computer 12, to state (2) and therefrom to state (3) next to which two primary outputs (Z0 and Z1) have logic value 1 and one primary output (Z2) has logic value zero. The module selecting device 33 can therefore be tested (blocks 153 and 154) without any physical device D being activated since the channel selecting device 35 is deactivated.

Afterwards, the sequential network is taken, to state (4) and from this latter one to state (5) next to which two primary outputs (Z2 and Z0) have logic value 1 and one primary output (Z1) has logic value zero. Thereby the channel selecting device 35 can be tested (blocks 157 and 158).

The channel selecting device 35 can thereby be tested (blocks 158 and 159) without any physical device D being activated since the module selecting device 33 is deactivated.

At the end of the operations of block 150 the sequential network therefore is in the internal stable state (5).

Then, the confirmation request message msg-conf is sent to the central unit 2 and after having received a correct response message msg-risp the telecontrol operations go on. In this way, the telecontrol 1 operations can occur only when the central unit operator correctly responds to the peripheral uni t 4; therefore a certain manual supervision is introduced from the central unit operator in operating the telecontrol 1.

Afterwards (block 220) the sequential network 10 is taken by the local computer 12, from the stable state (5) to the stable state (6); this transition is obtained by making primary inputs switch from X2 = 1, X1 = 1, X0 = 0 to X2 = 1, X1 = 0, X0 = 0.

In block 220 the sequential network 10 is further taken from stable state (6) to stable state (7); this transition is obtained by making primary inputs switch from X2 = 1, X1 = 0, X0 = 0 to X2 = 1, X1 = 0, X0 = 1.

Than the confirmation request message msg-conf is again sent to the central unit 2 and after having received a response message msg-risp in a prefixed time the telecontrol operations can go on.

Afterwards (block 270) the sequential network 10 receives from the local computer 12 primary inputs that take network 10 from stable state (7) to stable state (8); this transition is obtained by making primary inputs switch from X2 = 1, X1 = 0, X0 = 1 to X2 = 1, X1 = 1, X0 = 1.

Under stable state 8 all primary outputs have a logic value equal to 1, that is:

Z2 = 1;
Z1 = 1; and
Z0 = 1.

Output Z2 = 1 is further applied to the switching device 27, output Z1 = 1 is further applied to the switching device 26, output Z0 = 1 is further applied to the switching device 25.

In this way, all switching devices 25, 26 and 27 are closed, the channel selecting device 35 is activated and/or supplied, and also the module selecting device 33 is supplied and/or activated.

In this way, in order to activate an i-th physical device Di belonging to an i-th module and to an i-th channel, it is only necessary to:

*   apply a module selection signal Mi equal to a logic "1";
*   apply a channel selection signal CHi equal to a logic "1".

The channel selecting device 35 and the module selecting device 33 have already been activated from sequential network 10.

From what have been said above the advantages of the telecontrol according to the present invention are evident since a telecontrol device is realized in which the central unit 2 communicates with at least one peripheral unit 4 equipped with a sequential network 10 and adapted to control (through devices 33, 35) at least one physical device Di.

The sequential network 10 is adapted to be set, in response to a prefixed sequence of primary inputs signals generated by the local computer 12 activated by a message coming from the central unit 2, into an internal activation state (state (8)) next to which primary output signals (Z2 = 1 Z1 = 1, Z0 = 1) are generated, making it possible to activate at least one device Di.

It can be noted that only for the internal activation state (8) primary output signals are produced that are all equal to a logic "1" making it possible to close all switching devices 25, 26 and 27, the activation of both module selecting device 33 and channel selecting device 35, and therefor the activation of at least one device D.

The sequential network 10 is adapted to be set, in response to a sequence of primary input signals different from the prefixed sequence, into an internal state in which the primary output signals make it impossible to activate devices Di since an internal state is reached different from the internal activation state (8).

It can be detected that for each internal state different from the internal activation state (8) primary output signals are produced that include at least one logic zero, making it impossible to close all switching devices 25, 26, 27 with the consequent deactivation of at least one between module selecting device 33 and channel selecting device 35 and making it impossible to activate the devices D.

In this way, the activation of any device D only occurs next to a correct sequence of primary inputs issued by the local computer 12 (in the embodiment the sequence is X2, X1, X0 = 0, 0, 0 -> 0, 0, 1 -> 0, 1, 1 -> 0, 1, 0 -> 1, 1, 0 -> 1, 0, 0 -> 1, 0, 1 -> 1, 1, 1 described previously) that take the sequential network 10 from the rest state to the pre-activation state and then to the activation state (in the embodiment with transition from internal states (1) --> (2) --> (3) --> (4) --> (5) --> (6) --> (7) --> (8)) with the possible control of devices Di.

An incorrect sequence of primary inputs, that is different from the only correct sequence that takes the sequential network from the rest state to the activation state, due to hardware and/or software errors of the local computer 12, is not recognized why it takes the sequential network into an internal state that is different from the activation state preventing *de facto* the activation of any device D. In this way the telecontrol device safety is gradually increased since hardware and/or software failures of unit 4 prevent the activation of device D.

The sequential network is anyway tested in order to check its correct operation (block 120) and channel selecting device 35 and module selecting device 33 that cooperate controlling the physical device D, are checked.

The telecontrol device according to the present invention performs a plurality of safety auxiliary functions adapted to increase the global safety of the device itself.

For such purpose the local computer 12 is provided with respective circuits (not shown) adapted to:

- detect the state transitions of primary inputs (X0, X1, X2);
- detect the state transitions of primary outputs (Z0, Z1, Z2);
- deem as acceptable the state transitions of primary outputs occurred after state transitions of primary inputs;
- detect a network malfunction situation if a state transition of primary outputs (Z0, Z1, Z2) occurs without a previous state transition of primary inputs (X0, X1, X2).

The above network malfunction situation, in which the network changes state without a primary inputs variation, typically occurs in cases of failure of network internal components, for example malfunction of relays composing the sequential network 10.

Under to the above-mentioned network malfunction situation, the local computer 12 stops the supply of all peripheral units 4 with the following impossibility of activating any physical device Di.

The computer 12 is also equipped with circuits, in particular combinatorial networks (not shown), adapted to:

- detect primary activation inputs for which it is provided that the sequential network 10 (depending on what is established by table TF) is taken to each stable activation state - in the described embodiment such operation corresponds to detecting primary inputs X2 = 1, X1 = 1, and X0 = 1 adapted to take network 10 in its stable activation state (8);
- detect whether when such primary activation inputs (X2 = 1; X1 = 1; and X0 = 1) are present, the secondary inputs have a first prefixed value (in the described embodiment Y3 = 1; Y2 = 1; Y1 = 1; Y0 = 1), corresponding to a network unstable activation state (unstable state 8), or a second prefixed value (in the described embodiment Y3 = 0; Y2 = 1; Y1 = 1; Y0 = 1), corresponding to a network stable activation state (stable state 8); and
- detect a fatal error situation if, next to the detected primary activation inputs, secondary inputs are detected whose value is different from the first prefixed value and from the second prefixed value.

In other words it is checked whether the stable activation state (8) is reached through the unstable activation state 8 and consequently every transition coming from the stable state (8), since it comes from a state different from the different unstable state 8, is considered representative of a fatal error.

Under the above-mentioned fatal error, the local computer 12 stops the supply of all peripheral units 4 with the following impossible activation of physical devices Di.

The peripheral unit 4 supply is therefore possible only after a manual trigger of the peripheral unit 4 itself.

The computer 12 is further equipped with circuits, for example combinatorial networks (not shown), adapted to:

- detect primary activation outputs for which the activation of devices Di is controlled - in the described embodiment such operation corresponds to detecting primary outputs with Z2 = 1; Z1 = 1 and Z0 = 1 corresponding to the stable activation state (8) under which it is possible to activate devices Di;
- detect whether, if such primary activation outputs (Z2 = 1; Z1 = 1 and Z0 = 1) are present, primary inputs have a corresponding prefixed value provided for the activation (in the described embodiment X2 = 1; X1 = 1; X0 = 1), and
- detect an error situation if, when detecting primary activation outputs, primary inputs are detected whose value is different from the prefixed value provided for the activation.

In other words it is checked whether the configuration (Z2 = 1; Z1 = 1; Z0 = 1) of primary outputs that allows the activation of devices Di is reached next to a single primary inputs configuration (X2 = 1; X1 = 1; X0 = 1).

Under the above-said error, the local computer 12 stops the supply of the peripheral unit 4 in order to prevent the control of physical devices Di.

The peripheral unit block, different from the above-said fatal error, is not, in this case, complete and irreversible; it can in fact be noted that the above-said error condition is reached, for a brief moment, when the sequential network 10 passes from stable state (15) to stable state (1). The second stable state (15) transition is in fact related to the unstable state 1 so that (see the eighth line of table TF) $Z2 = 1$; $Z1 = 1$; $Z0 = 1$; but $X2 = 0$; $X1 = 0$; $X0 = 0$ different from $X2 = 1$; $X1 = 1$; $X0 = 1$.

As is well known a sequential network 10 can be described, in addition to the representation through the above-said table TF, with a system of equations that mutually link primary inputs ($X2$, $X1$, $X0$), primary outputs ($Z2$, $Z1$, $Z0$), excitations ($E3$, $E2$, $E1$, $E0$) and secondary inputs ($Y3$, $Y2$, $Y1$, $Y0$).

According to a preferred embodiment of the present invention, the above-mentioned system of equations, describing the sequential network 10, is chosen so that excitations ($E3$, $E2$, $E1$, $E0$) are function only of primary inputs ($X2$, $X1$, $X0$) and of secondary inputs ($Y3$, $Y2$, $Y1$, $Y0$) while primary outputs ($Z2$, $Z1$, $Z0$) are function only of secondary inputs ($Y3$, $Y2$, $Y1$, $Y0$), that is:

$$E3 = f1(X2, X1, X0, Y3, Y2, Y1, Y0)$$

$$E2 = f2(X2, X1, X0, Y3, Y2, Y1, Y0)$$

$$E1 = f3(X2, X1, X0, Y3, Y2, Y1, Y0)$$

$$E0 = f4(X2, X1, X0, Y3, Y2, Y1, Y0)$$

(first system of equations)

$$Z2 = g1(Y3, Y2, Y1, Y0)$$

$$Z1 = g2(Y3, Y2, Y1, Y0)$$

$$Z0 = g3(Y3, Y2, Y1, Y0)$$

(second system of equations)

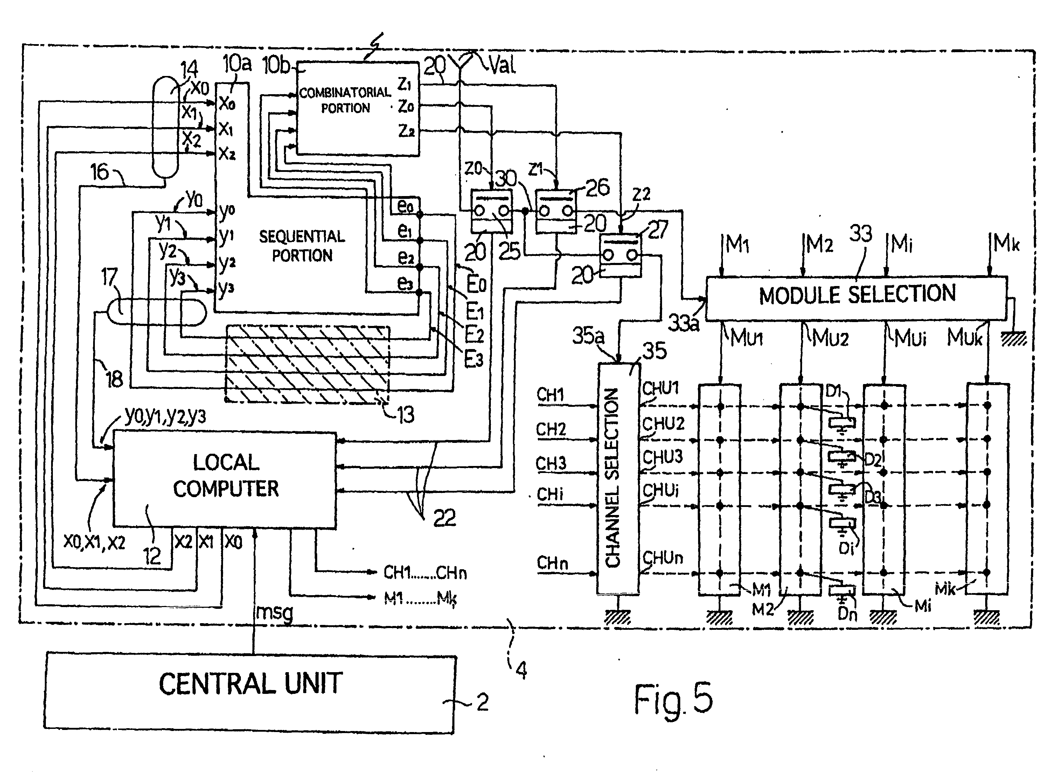

Such sequential network representation allows realizing the network 10 through (figure 5) a strictly sequential portion 10a that realizes the first system of equations and a combinatorial portion 10b that cooperates with the sequential portion 10a and realizes the second system of equations.

In particular, the sequential portion 10a has:

- first inputs $X2$, $X1$, $X0$ on which primary input signals $X2$, $X1$, $X0$ (primary inputs) are present that come from the local computer 12; and
- a plurality of second outputs $e0$, $e1$, $e2$, $e3$ on which the respective signals $E0$, $E1$, $E2$, $E3$ are present which are transferred, through feedback loops 13 to the respective second inputs of the sequential portion 10a on which secondary input signals $Y0$, $Y1$, $Y2$, $Y3$ (secondary inputs) are present.

The second outputs $e0$, $e1$, $e2$, $e3$ of the sequential portion 10a communicate with inputs of the combinatorial portion 10b to supply secondary outputs signals $E0$, $E1$, $E2$, $E3$ to the combinatorial portion 10b input that supplies as outputs primary output signals realizing the second system of equations described before:

$$Z2 = g1(Y3, Y2, Y1, Y0)$$

$$Z1 = g2(Y3, Y2, Y1, Y0)$$

$$Z0 = g3(Y3, Y2, Y1, Y0)$$

since (apart from the delay of reaction 13), E0 = Y0, E1 = Y1, E2 = Y2, E3 = Y3.

The embodiment described with reference to figure 5 has a big advantage deriving from the fact that the sequential portion 10a and the combinatorial portion 10b respectively described by the first and the second system of equations are simple, that is with less unknown values, with respect to the sequential network 10 described by the system of equations that, as previously said, links together primary inputs (X2, X1, X0), primary outputs (Z2, Z1, Z0), excitations (E0, E1, E2, E3) and secondary inputs (Y3, Y2, Y1, Y0).

This implies, realizing the sequential portion 10a and/or the combinatorial portion 10b through discrete components, particularly relays, the realization of circuits composed of a lower number of components, each showing less complexity.

It is in fact known that if a sequential network is realized through relays, it is necessary to use at least one relay for each primary input X2, X1, X0 and at least one relay for each secondary input Y3, Y2, Y1, Y0. In the shown embodiment at least seven relays must therefore be used for the sequential network 10.

Each relay associated with a variable (primary input or secondary input) must also have a number of mobile contacts that is at least equal to the number of times that such variable appears in the system of equations that describes the sequential network.

From what have been said above, it is clear that the more complex is the network, the more relays must be used with the following complication of relays that must have a high number of mobile contacts (multi-contact relays).

It is further known to use, for safety reasons, safety relays with forced guides having many mobile contacts that are mechanically linked one another.

It can further happen that relays are necessary that have a very high number of mobile contacts and that such relays are not available on the market.

In such case relays are realized by arranging in parallel more single multi-contact relays.

This fact is extremely disadvantageous since it generates the loss of the physical connection between the relays contacts arranged in parallel and makes the use of safety relays null.

The above-described advantageous embodiment: solves the above-mentioned inconveniences, since the combinatorial portion 10b, having a simpler structure, can be realized with safety relays with forced guides having mobile contacts mechanically linked one to another.

In fact it is not required to use safety relays having a high number of contacts and so it is not necessary to arrange a great number of multi-contact relays in parallel.

The use of forced guides relays in fact imply a further advantage deriving from the fact that a mobile relay contact is used to re-read the binary state of the variable realized by the relays itself; in this way, by using forced-guided relays, the variable state being read always corresponds to the real variable state realized by the relay.

In this way, secondary outputs Z2, Z1, Z0 of the combinatorial portion 10b that, as previously said, only uses forced-guided relays, are detected by using mobile relay contacts in such a way that the read primary outputs state always corresponds to the really realized state.

The other parts of the telecontrol 1 cooperating with the sequential portion 10a and the network portion 10b are equal to the previously described ones and therefore are designated by the same numbers and are not further described and illustrated. The telecontrol operating mode described with the help of figures 2, 3 and 4 can also be applied to the telecontrol in figure 5. In particular, the auxiliary safety functions are also performed by the telecontrol in figure 5 which, using always forced-guided relays with a relay contact used to take the binary state variable associated to the relay itself, uses detected values of primary inputs, secondary inputs and of primary outputs that surely correspond to the implemented ones. The safety of the telecontrol device 1 is thereby further improved.

**Claims**

1. Telecontrol device wherein a central unit (2) communicates with at least one peripheral unit (4); said peripheral unit (4) controlling (33, 35) at least one physical device (Di),
   **characterised in that** said peripheral unit comprises at least one local processing unit (12) and at least one sequential network (10) having first inputs (x0, x1, x2) adapted to receive primary input signals (X2, X1, X0) generated by said local processing unit (12); said sequential network (10) having first outputs (z0, z1, z2) supplying primary output signals (Z2, Z1, Z0) to control (33, 35) said phisical device (Di);
   said sequential network(10) being adapted to be set, in response to a prefixed sequence of primary input signals (X2, X1, X0), into an internal activation state ((8)) in which primary outputs signals (Z2, Z1, Z0) are generated to activate (33, 35) said device (Di);

said sequential network (10) including a sequential portion (10a) and a combinatorial portion (10b) cooperating with the sequential portion (10a); said sequential portion (10a) having:

- first inputs (x2, x1, x0) on which said primary input signals (X2, X1, X0) are present coming from said local processing unit (12); and
- a plurality of second outputs (e0, e1, e2, e3) on which respective secondary output signals (E0, E1, E2, E3) arse present, that are transferred, through feedback loops (13), to respective second inputs of said sequential portion (10a) on which secondary input signals (Y0, Y1, Y2, Y3) are present;

said second outputs (e0, e1, e2, e3) of said sequential portion (10a) communicating with inputs of the combinatorial portion (10b) to supply secondary output signals (E0, E1, E2, E3) to the combinatorial portion (10b) input that supplies as output said primary output signals (Z2, Z1, Z0).

**2.** Device according to claim 1, **characterised in that** said combinatorial portion (10b) comprises a plurality of forced-guided relays each one of which includes a plurality of mobile contacts mechanically linked one to another.

**3.** Device according to claim 1, **characterised in that** said sequential network is adapted to be set, in response to a sequence of primary input signals (X2, X1, X0) different from said prefixed sequence, into an internal state in which the primary output signals (Z2, Z1, Z0) make it impossible to activate (33, 35) said device (Di).

**4.** Device according to claim 1 or 2, **characterised in that** it includes first test means (120, 140) adapted to detect a correct operation (134) of said sequential network (10) and a faulty operation (125) of the sequential network (10) itself.

**5.** Device according to claim 4, **characterised in that** such first test means (120, 140) comprise:

- forcing means (121, 124, 128, 131) each one of which is adapted to realize a transition of primary input signals of said network (10);
- control means (123, 127, 130a, 133) each one of which can be activated following the completion of the performed transition by a respective forcing means and is adapted to check if the transition has realized, in said network (10), a prefixed internal state variation.

**6.** Device according to claim 5, wherein said sequential network (10) has a plurality of secondary inputs (y0, y1, y2, y3), **characterised in that** every control means (123, 127, 130a, 133) is adapted to verify if the performed transition made by the respective forcing means has realized a prefixed variation of the secondary input signals (Y0, Y1, Y2, Y3) being present on said secondary inputs.

**7.** Device according to claim 5 or 6, **characterised in that** it includes a plurality of delay means (122, 126, 129, 132) each one of which is interposed between a respective forcing means and a control means and can be activated following the completion of the transtion of primary inputs of said network (10) performed by said forcing means.

**8.** Device according to any one of claims 4 to 7, **characterised in that** it includes check means (110) that can be selected following the activation (100) of said telecontrol (1) and adapted to verify a rest state of said sequential network (10) wherein all primary outputs are null (Z0 = 0; Z1 = 0, Z2 = 0) and simultaneoully all excitation signals being present on secondary inputs of such sequential network (10) are also null (E0 = 0; E1 = 0; E2 = 0; E3 = 0);

said check means (110) being adapted to activate said first test means (120) upon the detection of said rest state and being further adapted to detect an error condition (135) if said rest state is not detected following the activation of said telecontrol device.

**9.** Device according to claim 8, **characterised in that** it includes reset means (130) that can be selected by said check means (110) when said rest state has not been detected; said rest means (130) being adapted to force said network into such rest state.

**10.** Device according to any one of the previous claims, wherein driving means (33, 35) are provided for such physical device (Di) interposed between said sequential network (10) and the physical device itself, **characterised in that** it includes second test means (150, 160) adapted to detect a correct operation (159b) of said driving means (33, 35) and a faulty operation (155) of the driving means (33, 35) themselves.

**11.** Device according to claim 10, **characterised in that** said second test means (150, 160) comprise:

- transition control means (151, 157) adapted to take said sequential network (10) into an internal test state, in which primary output signals are provided adapted to take said driving means (33, 35) into an operation state in which it is possible to realize a control operation (154, 159) of the driving means (33, 35) themselves without realizing the activation of said device (D).

**12.** Device according to claim 11, **characterised in that** said driving means include:

- at least two modules (M1, M2) each one of which is associated with at least two physical devices (D1, D2) each one of which is related to a respective channel (CH1, CH2);
- one module selecting device (33) for the selection of at least one of said two modules;
- one channel selecting device (35) for the selection of at least one of said two channels (CH1, CH2); said transition control means (151, 157) comprising:

- first transition control means (151) adapted to take said sequential network (10) into a first internal test state ((3)) in which primary output signals are provided adapted to activate only said module selecting device (33) making it possible to perform a control operation (153, 154) of the module selecting device (33); and
- second transition control means (157) adapted to take said sequential network (10) into a second internal test state ((5)) in which primary output signals are provided adapted to activate only said channel selecting device (35) making it possible to perform a control operation (158, 159) of the channel selecting device (35) itself.

**13.** Device according to any one of the previous claims, **characterised in that** it includes confirmation request means (170, 180) adapted to create (170) a confirmation request message (msg-conf) and adapted to send (180) said confirmation request message to said central unit (2); said confirmation request means (170, 180) cooperating with listening means (190, 200, 210) to detect a response message (msg-risp) to said confirmation request message coming from said central unit (2);

said listening means (109, 200, 210) being adapted to allow the operations of said telecontrol device when said response message is in a prefixed relationship with said confirmation request message and to inhibit operations of said telecontrol device (1) if said response message does not satisfy said prefixed relationship.

**14.** Device according to claim 13 when depending on claim 9, **characterised in that** said confirmation request means (170, 180) can be selected if said second test means (150) detect a correct operation (159b) of said driving means (33, 35).

**15.** Device according to any one of the previous claims, **characterised in that** it includes pre-activation means (220) adapted to take said sequential network (10) into an internal pre-activation state ((7)); said sequential network (10) being adapted to perform a single transition (270) from said pre-activation state ((7)) to said activation state ((8)) following a prefixed variation of primary inputs.

**16.** Device according to claim 15, **characterised in that** said pre-activation means (220) are associated with further confirmation request means (240, 250) adapted to send (240) a further confirmation request message to said central unit (2); said further confirmation request means (240, 250) cooperating with further listening means (260) to detect a further response message to said further request message coming from said central unit (2) ;

said further listening means (260) being adapted to allow a following transition of said sequential network (10) from said pre-activation state to said activation state if said further response message has been at least received.

**17.** Device according to any one of the previous claims, **characterised in that** each first output (z2, z1, z0) of said sequential network (10) is associated with a respective switching device (27, 26, 25) adapted to be kept open for a first logic value ("0") of the primary output signal being present on a respective first output and adapted to be switched closed for a second logic value ("1") of the primary output signal being present on the first output;

said sequential network producing, in its internal activation state (8), primary output signals that are all equal to the second logic value ("1") for the closure of all said switching devices (25, 26, 27); said sequential network producing, in an internal state that is different from the internal activation state (8), at least one primary output signal equal to the first logic value ("0") to keep at least one switching device (25, 26, 27) open;

said switching devices (25, 26, 27) cooperating with said at least one physical device (D) to make it impossible to activate the physical device itself when at least one of said switches is open.

18. Device according to any one of the previous claims, **characterised in that** it includes first auxiliary safety means (12) adapted to:

- detect the state transitions of primary input signals (X0, X1, X2);
- detect the state transitions of primary output signals (Z0, Z1, Z2);
- deem as acceptable the state transitions of primary output signals occurred after state transitions of primary input signals;
- detect a network malfunction situation if a state transition of primary output signals (Z0, Z1, Z2) occurs without a previous state transition of primary input signals (X0, X1, X2).

19. Device according to claim 18, **characterised in that** it includes means (12) adapted to produce the deactivation of said peripheral unit (4) with the following impossible activation of said device (Di) under a detected malfunction situation of the network.

20. Device according to any of the previous claims, **characterised in that** it includes secondary auxiliary safety means (12) adapted to:

- detect primary activation input signals (X2 = 1; X1 = 1; and X0 = 1) for which it is provided that the sequential network (10) is set in the activation state;
- detect whether when such primary activation input signals (X2 = 1; X1 = 1; X0 = 1) are present secondary input signals have a first prefixed value (Y3 = 1; Y2 = 1; Y1 = 1; Y0 = 1), corresponding to an unstable network pre-activation state (8), or a second prefixed value (Y3 = 0; Y2 = 1; Y1 = 1; Y0 = 1), corresponding to the stable network activation state ((8)); and
- detect a fatal error situation if, under such primary input activation signals being detected, secondary input signals are detected having a value different from the first prefixed value and from the second prefixed value.

21. Device according to claim 20, **characterised in that** it includes means (12) adapted to produce the deactivation of said peripheral unit (4) with the consequent impossible activation of said device (Di) next to said detected fatal error.

22. Device according to any one of the previous claims, **characterised in that** it includes third auxiliary safety means (12) adapted to:

- detect primary activation output signals (Z2 = 1, Z1 = 1; Z0 = 1) for which the activation of the device (Di) is controlled;
- detect whether when such primary output signals (Z2 = 1, Z1 = 1; Z0 = 1) are present the primary input signals have a prefixed value provided for the activation (X2 = 1; X1 = 1; X0 = 1); and
- detect an error situation if, under such detected primary activation output signals, primary input signals are detected whose value is different from the prefixed value provided for the activation.

23. Device according to claim 22, **characterised in that** it includes means (12) adapted to generate the control deactivation of said device (Di) after said detected error.

24. Telecontrol method, wherein a central unit (2) communicates with at least one peripheral unit (4) ; said peripheral unit (4) being adapted to control (33, 35) at least one physical device (Di),
**characterised in that** it comprises the following steps:

- supplying (12) first inputs (x0, x1, x2) of a sequential network (10) with primary input signals (X2, X1, X0);
- taking on first outputs (z0, z1,z2) of said sequential network primary output signals (Z2, Z1, Z0) for the control (33, 35) of said device (Di);

said sequential network (10) being adapted to be set, in response to a prefixed sequence of primary input signals (X2, X1, X0), into an internal activation state ((8)) in which primary output signals (Z2, Z1, Z0) are generated

**EP 0 978 771 B1**

to activate (33, 35) said phisical device (Di);

said sequential network (10) comprising a sequential portion (10a) and a combinatorial portion (10b) cooperating with the sequential portion (10a);

said method further comprising the steps of:

- supplying said primary input signals to first inputs ($x_0$,$x_1$,$x_2$) of said sequential portion;
- providing at second outputs ($e_0$, $e_1$, $e_2$, $e_3$) of said sequential portion secondary output signals ($E_0$,$E_1$,$E_2$,$E_3$) and supplying said secondary output signals ($E_0$,$E_1$,$E_2$,$E_3$) to respective second inputs ($Y_0$,$Y_1$,$Y_2$,$Y_3$) of said, sequential portion; and
- providing said secondary output signals ($E_0$,$E_1$,$E_2$,$E_3$) to inputs of the combinatorial portion having first outputs ($Z_0$ $Z_1$ $Z_1$) supplyig said primary output signals ($Z_2$, $Z_1$, $Z_0$).

25. Method according to claim 24, **characterised in that** said sequential network is adapted to be set, in response to a sequence of primary input signals (X2, X1, X0) different from said prefixed sequence, into an internal state in which the primary output signals (Z2, Z1, Z0) make it impossible to activate (33, 35) said device (Di).

26. Method according to claim 24 or 25, **characterised in that** it includes a testing step (120, 140) to detect a correct operation (134) of said sequential network (10) and a faulty operation (125) of the sequential network (10) itself.

27. Method according to claim 26, **characterised in that** said testing step (120, 140) comprises the steps of:

- forcing a transition (121, 124, 128, 131) of primary input signals of said network (10);
- checking (123, 127, 130a, 133), following the completion of said transition, whether the performed transition realized, in said network (10), a prefixed internal state variation.

28. Method according to claim 27, wherein said sequential network (10) has a plurality of secondary inputs (y0, y1, y2, y3) **characterised in that** during said checking step (123, 127, 130a, 133) it is controlled whether the perfored transition realized a prefixed variation of secondary input signals (Y0, Y1, Y2, Y3) being present on said secondary inputs.

29. Method according to claim 27 or 28, **characterised in that** it includes a plurality of delay steps (112,126,129,132) each one of which is performed between a respective forcing step and a checking step.

30. Method according to any one of the previous claims 26 to 29, **characterised in that** it includes an initial rest checking step (110) to recognize a rest state of said sequential network (10) in which primary outputs are all null (Z0 = 0, Z1 = 0, Z2 = 0) and simultaneously all excitation signals being present on second outputs of said sequential network (10) are also null (E0 = 0; E1 = 0; E2 = 0);

said testing step (120) being performed if said rest checking step (110) detects said rest state;

said method further including the step of detecting an error condition (135) when said rest state is not detected.

31. Method according to claim 30, **characterised in that** it includes the step of forcing said network into said rest state if said rest state has not been detected.

32. Method according to any one of the previous claims 24 to 31, wherein driving means (33, 35) of said physical device (Di) are provided interposed between said sequential network (10) and the physical device itself, **characterised in that** it includes a second testing step (150, 160) to detect a correct operation (159b) of said driving means (33, 35) and a faulty operation (155) of the driving means (33, 35) themselves.

33. Method according of claim 32, **characterised in that** said second testing step (150, 160) comprises the step of taking (151, 157) said sequential network (10) into an internal test state in which primary output signals are supplied that are adapted to take said driving means (33, 35) into an operation state in which it is possible to realize a control operation (154, 159) of said driving means (33, 35) without realizing the activation of said device (D).

34. Method according to claim 33, **characterised in that** said driving means comprise:

- at least two modules (M1, M2) each one of which is associated with at least two physical devices (D1, D2) each one of which is related to a respective channel (CH1, CH2);
- one module selecting device (33) to select at least one between said at least two modules;
- one channel selecting device (35) to select at least one between said at least two channels (CH1, CH2);
  said method comprising the steps of:

- taking (151) said sequential network (10) into a first internal test state ((3)) in which primary output signals are provided that are adapted to activate only said module selecting device (33) making it possible a control operation (153, 154) of the module selecting device (33) itself; and
- taking (157) said sequential network (10) into a second internal test state ((5)) in which primary output signals are provided that are adapted to activate only said channel selecting device (35) making it possible to perform a control operation (158, 159) of the channel selecting device (35) itself.

35. Method according to any one of claims 24 to 34, **characterised in that** it includes a confirmation requesting step (170, 180) to create (170) a confirmation request message (msg-conf) being sent (180) to said central unit (2); said method comprising a listening step (190, 200, 210) to detect a response message (msg-risp) to said confirmation request message coming from said central unit (2);

   said listening step (190, 200, 210) being adapted to allow the telecontrol operations if said response message is in a prefixed relationship with said confirmation request message and to inhibit the telecontrol (1) operations if said response message does not satisfy said prefixed relationship.

36. Method according to any one of the previous claims 24 to 35, **characterised in that** it includes a pre-activation step (220) to take said sequential network (10) into an internal pre-activation state ((7)); said sequential network (10) being adapted to perform a single transition (270) from said pre-activation state ((7)) to said activation state ((8)) following a prefixed variation of primary inputs.

37. Method according to any one of the previous claims 24 to 36, **characterised in that** each first output (z2,z1,z0) of said sequential network (10) is associated with a respective switching device (27, 26, 25) adapted to be kept open for a first logic value ("0") of the primary output signal being present on a respective first output and adapted to be switched closed for a second logic value ("1") of the primary output signal being present on the first output;

   said sequential network producing, in its internal activation state (8), primary output signals all equal to the second logic value ("1") for the closure of all said switching devices (25, 26, 27);
   said sequential network producing, next to an internal state different from the internal activation state (8), at least one primary output signal equal to the first logic value ("0") to keep at least one switching device (25, 26, 27) open;
   said switching devices (25, 26, 27) cooperating with said at least one physical device (D) to make it impossible to activate the physical device itself when at least one of said switching devices is open.

38. Method according to any one of the previous claim 24 to 37, **characterised in that** it includes a first safety step (12) comprising the sub-steps of:

- detecting the state transitions of primary input signals (X0, X1, X2);
- detecting the state transitions of primary output signals (Z0, Z1, Z2);
- deeming as acceptable the state transitions of primary output signals occurred following state transitions of primary input signals;
- detecting a network malfunction situation if a state transition of primary output signals (Z0, Z1, Z2) occurs without a previous state transition of primary input signals (X0, X1, X2).

39. Method according to claim 38, **characterised in that** it includes the step of generating the deactivation of said peripheral unit (4) with the following impossible activation of said device (Di) next to a detected malfunction situation of the network.

40. Method according to any one of the previous claims 24 to 39, **characterised in that** it includes a second safety step (12) comprising the sub-steps of:

- detecting primary activation signals (X2 = 1; X1 = 1,; X0 = 1) for which it is provided that said sequential network (10) goes into its activation state;

- detecting whether when primary activation signals (X2 = 1; X1 = 1,; X0 = 1) are present the secondary input signals have a first prefixed value (Y3 = 1, Y2 = 1; Y1 = 1; Y0 = 1) corresponding to a network unstable activation state (8), or a second prefixed value (Y3 = 0, Y2 = 1; Y1 = 1; Y0 = 1) corresponding to the network stable activation state ((8)); and
- detecting a fatal error situation when, under such detected primary activation input signals, secondary input signals are detected whose value is different from the first prefixed value and the second prefixed value.

41. Method according to claim 40, **characterised in that** it includes a step of deactivating said peripheral unit (4) with the following impossible activation of said device (Di) if said fatal error has been detected.

42. Method according to any one of claims 24 to 41, **characterised in that** it includes a third safety step (12) comprising the sub-steps of:

- detecting primary activation output signals (Z2 = 1; Z1 = 1; Z0 = 1) for which the activation of the device (Di) is controlled;
- detecting whether when such activation primary output signal (Z2 = 1; Z1 = 1; Z0 = 1) are present the primary input signals have a prefixed value provided for the activation (X2 = 1; X1 = 1; X0 = 1); and
- detecting an error situation when, under such detected activation outputs signals, primary input signals are detected whose value is different from the value for which the activation is controlled.

43. Method according to claim 42, **characterised in that** it includes the step of generating the control deactivation to said device (Di) if said error has been detected.


**Patentansprüche**

1. Telesteuerungsvorrichtung, wobei eine Zentraleinheit (2) mit mindestens einer Peripherieeinheit (4) kommuniziert; wobei die Peripherieeinheit (4) mindestens eine physikalische Vorrichtung (Di) steuert (33, 35), **dadurch gekennzeichnet, dass** die Peripherieeinheit mindestens eine lokale Verarbeitungseinheit (12) und mindestens ein sequentielles Netz (10) umfasst, mit ersten Eingängen (x0, x1, x2), die dazu angeordnet sind, durch die lokale Verarbeitungseinheit (12) erzeugte primäre Eingangssignale (X2, X1, X0) zu empfangen; wobei das sequentielle Netz (10) erste Ausgänge (z0, z1, z2) aufweist, die primäre Ausgangssignale (Z2, Z1, Z0) zur Steuerung (33, 35) der physikalischen Vorrichtung (Di) liefern; wobei das sequentielle Netz (10) dazu angeordnet ist, in Ansprechen auf eine vorgegebene Sequenz von primären Eingangssignalen (X2, X1, X0) in einen internen Aktivierungszustand ((8)) eingestellt zu werden, in dem primäre Ausgangssignale (Z2, Z1, Z0) zur Aktivierung (33, 35) der Vorrichtung (Di) erzeugt werden; das sequentielle Netz (10) einen sequentiellen Abschnitt (10a) und einen mit dem sequentiellen Abschnitt (10a) kooperierenden kombinatorischen Abschnitt (10b) umfasst; der sequentielle Abschnitt (10a) aufweist:

- erste Eingänge (x2, x1, x0), an denen von der lokalen Verarbeitungseinheit (12) kommende primäre Eingangssignale (X2, X1, X0) vorliegen; und

- eine Mehrzahl von zweiten Ausgängen (e0, e1, e2, e3), an denen jeweilige sekundäre Ausgangssignale (E0, E1, E2, E3) vorliegen, die über Rückkopplungsschleifen (13) zu jeweiligen sekundären Eingängen des sequentiellen Abschnitts (10a) übertragen werden, an denen sekundäre Eingangssignale (Y0, Y1, Y2, Y3) vorliegen; wobei die zweiten Ausgänge (e0, e1, e2, e3) des sequentiellen Abschnitts (10a) mit Eingängen des kombinatorischen Abschnitts (10b) kommunizieren, um sekundäre Ausgangssignale (E0, E1, E2, E3) zum Eingang des kombinatorischen Abschnitts (10b) zu liefern, der als Ausgabe die primären Ausgangssignale (Z2, Z1, Z0) liefert.

2. Vorrichtung nach Anspruch 1, **dadurch gekennzeichnet, dass** der kombinatorische Abschnitt (10b) eine Mehrzahl von Relais mit Zwangsführung umfasst, von denen jedes eine Mehrzahl von mechanisch miteinander verbundenen mobilen Kontakten umfasst.

3. Vorrichtung nach Anspruch 1, **dadurch gekennzeichnet, dass** das sequentielle Netz dazu angeordnet ist, in Antwort auf eine Sequenz von primären Eingangssignalen (X2, X1, X0), die sich von der vorgegebenen Sequenz unterscheiden, in einen internen Zustand gesetzt zu werden, in dem die primären Ausgangssignale (Z2, Z1, Z0) es unmöglich machen, die Vorrichtung (Di) zu aktivieren (33, 35).

4. Vorrichtung nach Anspruch 1 oder 2, **dadurch gekennzeichnet, dass** sie eine erste Testeinrichtung (120, 140) umfasst, dazu angeordnet, einen ordnungsgemäßen Betrieb (134) des sequentiellen Netzes (10) und einen fehlerhaften Betrieb (125) des sequentiellen Netzes (10) selbst zu erfassen.

5. Vorrichtung nach Anspruch 4, **dadurch gekennzeichnet, dass** die erste Testeinrichtung (120, 140) umfasst.

- Zwangseinrichtungen (121, 124, 128, 131), von denen jede dazu angepasst ist, einen Übergang von primären Eingangssignalen des Netzes (10) zu realisieren;

- Steuereinrichtungen (123, 127, 130a, 133), von denen jede folgend der Beendigung des vorgenommenen Übergangs aktiviert werden kann, mittels einer jeweiligen Zwangseinrichtung, und die dazu angepasst sind, zu überprüfen, ob der Übergang in dem Netz (10) eine vorgegebene interne Zustandsveränderung realisiert hat.

6. Vorrichtung nach Anspruch 5, wobei das sequentielle Netz (10) eine Mehrzahl von sekundären Eingängen (y0, y1, y2, y3) umfasst, **dadurch gekennzeichnet, dass** jede Steuereinrichtung (123, 127, 130a, 133) dazu angeordnet ist, zu verifizieren, ob der durch die jeweilige Zwangseinrichtung durchgeführte Übergang eine vorgegebene Veränderung der an den sekundären Eingängen anliegenden sekundären Eingangssignale (Y0, Y1, Y2, Y3) bewirkt hat.

7. Vorrichtung nach Anspruch 5 oder 6, **dadurch gekennzeichnet, dass** sie eine Mehrzahl von Verzögerungseinrichtungen (122, 126, 129, 132) umfasst, von denen jede zwischen einer jeweiligen Zwangseinrichtung und einer Steuereinrichtung angeordnet ist, und die folgend der Beendigung des durch die Zwangseinrichtung durchgeführten Übergangs von primären Eingaben des Netzes (10) aktiviert werden kann.

8. Vorrichtung nach einem der Ansprüche 4 bis 7, **dadurch gekennzeichnet, dass** sie eine Prüfeinrichtung (110) umfasst, die folgend der Aktivierung (100) der Telesteuerung (1) ausgewählt werden kann, und die dazu angeordnet ist, einen Ruhezustand des sequentiellen Netzes (10) zu verifizieren, wobei alle primären Ausgaben Null sind (Z0 = 0; Z1 = 0; Z2 = 0) und gleichzeitig alle Anregungssignale, die an sekundären Eingängen des sequentiellen Netzes (10) anliegen, ebenso Null sind (E0 = 0; E1 = 0; E2 = 0; E3 = 0) ;
wobei die Prüfeinrichtung (110) dazu angeordnet ist, die erste Testeinrichtung (120) bei Erfassung des Ruhezustands zu aktivieren, und weiter dazu angepasst ist, eine Fehlerbedingung (135) zu erfassen, falls der Ruhezustand folgend der Aktivierung der Telesteuervorrichtung nicht erfasst wird.

9. Vorrichtung nach Anspruch 8, **dadurch gekennzeichnet, dass** sie eine Rücksetzeinrichtung (130) umfasst, die durch die Prüfeinrichtung (110) ausgewählt werden kann, wenn der Ruhezustand nicht erfasst wurde; wobei die Ruheeinrichtung (130) dazu angeordnet ist, das Netz in solch einen Ruhezustand zu zwingen.

10. Vorrichtung nach einem der vorhergehenden Ansprüche, wobei eine Ansteuereinrichtung (33, 35) für eine solche physikalische Vorrichtung (Di) bereitgestellt ist, angeordnet zwischen dem sequentiellen Netz (10) und der physikalischen Vorrichtung selbst, **dadurch gekennzeichnet, dass** sie eine zweite Testeinrichtung (150, 160) umfasst, die dazu angepasst ist, einen ordnungsgemäßen Betrieb (159b) der Ansteuereinrichtung (33, 35) und einen fehlerhaften Betrieb (155) der Ansteuereinrichtung (33, 35) selbst zu erfassen.

11. Vorrichtung nach Anspruch 10, **dadurch gekennzeichnet, dass** die zweite Testeinrichtung (150, 160) umfasst:

- eine Übergangssteuereinrichtung (151, 157), die dazu angeordnet ist, das sequentielle Netz (10) in einen internen Testzustand zu bringen, in dem primäre Ausgangssignale bereitgestellt werden, dazu angeordnet, die Ansteuereinrichtung (33, 35) in einen Betriebszustand zu bringen, in dem es möglich ist, einen Steuerbetrieb (154, 159) der Ansteuereinrichtung (33, 35) selbst ohne eine Realisierung der Aktivierung der Vorrichtung (D) zu realisieren.

12. Vorrichtung nach Anspruch 11, **dadurch gekennzeichnet, dass** die Ansteuereinrichtung umfasst:

- mindestens zwei Module (M1, M2), von denen ein jedes mit mindestens zwei physikalischen Vorrichtungen (D1, D2) verknüpft ist, wobei jede mit einem bestimmten Kanal (CH1, CH2) in Beziehung steht;

- eine Modulauswahlvorrichtung (33) für die Auswahl mindestens eins der zwei Module;

- eine Kanalauswahlvorrichtung (35) für die Auswahl mindestens eines der zwei Kanäle (CH1, CH2);
wobei die Übergangssteuereinrichtung (151, 157) umfasst:

  - eine erste Übergangssteuereinrichtung (151) , dazu angeordnet, das sequentielle Netz (10) in einen ersten internen Testzustand ((3)) zu bringen, in dem primäre Ausgangssignale bereitgestellt werden, dazu angeordnet, nur die Modulauswahlvorrichtung (33) zu aktivieren, was es möglich macht, einen Steuerbetrieb (153, 154) der Modulauswahlvorrichtung (33) durchzuführen; und

  - eine zweite Übergangssteuereinrichtung (157), die dazu angeordnet ist, das sequentielle Netz (10) in einen zweiten internen Testzustand ((5)) zu bringen, in dem primäre Ausgangssignale bereitgestellt werden, dazu angeordnet, nur die Kanalauswahlvorrichtung (35) zu aktivieren, was es möglich macht, einen Steuerbetrieb (158, 159) der Kanalauswahlvorrichtung (35) selbst durchzuführen.

13. Vorrichtung nach einem der vorhergehenden Ansprüche, **dadurch gekennzeichnet, dass** sie eine Bestätigungsanfrageeinrichtung (170, 180) umfasst, dazu angeordnet, eine Bestätigungsanfragenachricht (msg-conf) zu erzeugen (170), und dazu angeordnet, die Bestätigungsanfragenachricht zu der Zentraleinheit (2) zu senden (180); wobei die Bestätigungsanfrageeinrichtung (170, 180) mit einer Abhöreinrichtung (190, 200, 210) kooperiert, um eine Antwortnachricht (msg-risp) von der Zentraleinheit (2) an die Bestätigungsanfragenachricht zu erfassen; wobei die Abhöreinrichtung (109, 200, 210) dazu angeordnet ist, den Betrieb der Telesteuerungsvorrichtung zu ermöglichen, wenn die Antwortnachricht in einer vorgegebenen Beziehung zu der Bestätigungsanfragenachricht steht, und den Betrieb der Telesteuerungsvorrichtung (1) zu verhindern, falls die Antwortnachricht die vorgegebene Beziehung nicht erfüllt.

14. Vorrichtung nach Anspruch 13, in Abhängigkeit von Anspruch 9, **dadurch gekennzeichnet, dass** die Bestätigungsanfrageeinrichtung (170, 180) ausgewählt werden kann, falls die zweite Testeinrichtung (150) einen ordnungsgemäßen Betrieb (159b) der Ansteuereinrichtung (33, 35) erfasst.

15. Vorrichtung nach einem der vorhergehenden Ansprüche, **dadurch gekennzeichnet, dass** sie eine Voraktivierungseinrichtung (220) umfasst, dazu angeordnet, das sequentielle Netz (10) in einen internen Voraktivierungszustand ((7)) zu bringen; wobei das sequentielle Netz (10) dazu angeordnet ist, einen einzelnen Übergang (270) von dem Voraktivierungszustand ((7)) in den Aktivierungszustand ((8)) folgend einer vorgegebenen Veränderung von primären Eingaben durchzuführen.

16. Vorrichtung nach Anspruch 15, **dadurch gekennzeichnet, dass** die Voraktivierungseinrichtung (220) einer weiteren Bestätigungsanfrageeinrichtung (240, 250) zugeordnet ist, dazu angeordnet, eine weitere Bestätigungsanfragenachricht zur Zentraleinheit (2) zu senden (240); wobei die weitere Bestätigungsanfrageeinrichtung (240, 250) mit einer weiteren Abhöreinrichtung (260) kooperiert, um eine weitere Antwortnachricht von der Zentraleinheit (2) an die weitere Anfragenachricht zu erfassen; wobei die weitere Abhöreinrichtung (260) dazu angeordnet ist, einen folgenden Übergang des sequentiellen Netzes (10) von dem Voraktivierungszustand in Aktivierungszustand zu erlauben, falls eine weitere Antwortnachricht zumindest empfangen wurde.

17. Vorrichtung nach einem der vorhergehenden Ansprüchen, **dadurch gekennzeichnet, dass** jeder erste Ausgang (z2, z1, z0) des sequentiellen Netzes (10) einer jeweiligen Schaltvorrichtung (27, 26, 25) zugeordnet ist, dazu angeordnet, für einen ersten logischen Wert ("0") des primären Ausgangssignals, das an einem jeweiligen ersten Ausgang anliegt, offengehalten zu werden, und dazu angeordnet, für einen zweiten logischen Wert ("1") des am ersten Ausgang anliegenden primären Ausgangssignals geschlossen geschaltet zu werden; wobei das sequentielle Netz in seinem internen Aktivierungszustand (8) primäre Ausgangssignale erzeugt, die alle gleich dem zweiten logischen Wert ("1") für die Schließung aller der Schaltvorrichtungen (25, 26, 27) sind; das sequentielle Netz in einem internen Zustand, der sich von dem internen Aktivierungszustand (8) unterscheidet, mindestens ein primäres Ausgangssignal erzeugt, das gleich dem ersten logischen Wert ("0") ist, um mindestens eine Schaltvorrichtung 25, 26, 27) offen zu halten; wobei die Schaltvorrichtungen (25, 26, 27) mit mindestens einer physikalischen Vorrichtung (D) kooperieren, um es unmöglich zu machen, die physikalische Vorrichtung selbst zu aktivieren, wenn mindestens einer der Schalter offen ist.

18. Vorrichtung nach einem der vorhergehenden Ansprüche, **dadurch gekennzeichnet, dass** sie eine erste Zusatzsicherheitseinrichtung (12) umfasst, dazu angeordnet:

- die Zustandsübergänge von primären Einqanqssiqnalen (X0, X1, X2) zu erfassen;

- die Zustandsübergänge von primären Ausgangssignalen (Z0, Z1, Z2) zu erfassen;

- die Zustandsübergänge von primären Ausgangssignalen nach Zustandsübergängen von primären Eingangssignalen als annehmbar zu erachten;

- eine Netzfehlfunktionssituation zu erfassen, falls ein Zustandsübergang von primären Ausgangssignalen (Z0, Z1, Z2) ohne einen vorhergehenden Zustandsübergang von primären Eingangssignalen (X0, X1, X2) auftritt.

19. Vorrichtung nach Anspruch 18, **dadurch gekennzeichnet, dass** sie eine Einrichtung (12) umfasst, dazu angeordnet, die Deaktivierung der Peripherieeinheit (4) mit der folgenden Unmöglichkeit der Aktivierung der Vorrichtung (Di) bei einer erfassten Fehlfunktionssituation des Netzes zu bewirken.

20. Vorrichtung nach einem der vorhergehenden Ansprüchen, **dadurch gekennzeichnet, dass** sie eine sekundäre Zusatzsicherheitseinrichtung (12) umfasst, dazu angepasst:

- primäre Aktivierungseingangssignale (X2 = 1; X1 = 1; und X0 = 1) zu erfassen, für die bereitgestellt ist, dass das sequentielle Netz (10) in den Aktivierungszustand gesetzt ist;

- zu erfassen, ob, wenn solche primären Aktivierungseinfangssignale (X2 = 1; X1 = 1; X0 = 1) vorliegen, sekundäre Eingangssignale einen ersten vorgegebenen Wert aufweisen (Y3 = 1; Y2 = 1; Y1 = 1; Y0 = 1), entsprechend einem instabilen Netzvoraktivierungszustand (8), oder einen zweiten vorgegebenen Wert (Y3 = 0; Y2 = 1; Y1 = 1; Y0 = 1), entsprechend dem stabilen Netzaktivierungszustand ((8)); und

- eine gravierende Fehlersituation zu erfassen, falls bei Erfassung solcher primärer Eingangsaktivierungssignale sekundäre Eingangssignale erfasst werden, die einen Wert aufweisen, der sich von dem ersten vorgegebenen Wert und von dem zweiten vorgegebenen Wert unterscheidet.

21. Vorrichtung nach Anspruch 20, **dadurch gekennzeichnet, dass** sie eine Einrichtung (12) umfasst, dazu angeordnet, die Deaktivierung der Peripherieeinheit (4) mit der folgenden Unmöglichkeit einer Aktivierung der Vorrichtung (Di) folgend dem erfassten gravierenden Fehler zu bewirken.

22. Vorrichtung nach einem der vorhergehenden Ansprüche, **dadurch gekennzeichnet, dass** sie eine dritte Zusatzsicherheitseinrichtung (12) umfasst, dazu angeordnet:

- primäre Aktivierungsausgangssignale (Z2 = 1, Z1 = 1; Z0 = 1) zu erfassen, für die die Aktivierung der Vorrichtung (Di) gesteuert wird;

- zu erfassen, ob, wenn solche primären Ausgangssignale (Z2 = 1, Z1 = 1; Z0 = 1) vorliegen, die primären Eingangssignale einen vorgegebenen Wert aufweisen, der für die Aktivierung bereitgestellt ist (X2 = 1; X1 = 1; X0 = 1); und

- eine Fehlersituation zu erfassen, falls bei solcher Art erfassten primären Aktivierungsausgangssignalen primäre Eingangssignale erfasst werden, deren Wert sich von dem für die Aktivierung bereitgestellten vorgegebenen Wert unterscheidet.

23. Vorrichtung nach Anspruch 22, **dadurch gekennzeichnet, dass** sie eine Einrichtung (12) umfasst, dazu angeordnet, die Steuerungsdeaktivierung der Vorrichtung (Di) nach dem erfassten Fehler zu bewirken.

24. Telesteuerungsverfahren, wobei eine Zentraleinheit (2) mit mindestens einer Peripherieeinheit (4) kommuniziert; wobei die Peripherieeinheit (4) dazu angeordnet ist, mindestens eine physikalische Vorrichtung (Di) zu steuern (3, 35),
**dadurch gekennzeichnet, dass** es die folgenden Schritte umfasst:

- Liefern primärer Eingangssignale (X2, X1, X0) an erste Eingänge (x0, x1, x2) eines sequentiellen Netzes (10);

- Aufnehmen, an ersten Ausgängen (z0, z1, z2) des sequentiellen Netzes, von primären Ausgangssignalen (Z2, Z1, Z0) für die Steuerung (33, 35) der Vorrichtung (Di);
wobei das sequentielle Netz (10) dazu angeordnet ist, in Antwort auf eine vorgegebene Sequenz primärer Eingangssignale (X2, X1, X0) in einen internen Aktivierungszustand ((8)) gesetzt zu werden, in dem primäre Ausgangssignale (Z2, Z1, Z0) zur Aktivierung (33, 35) der physikalischen Vorrichtung (Di) erzeugt werden;
wobei das sequentielle Netz (10) einen sequentiellen Abschnitt (10a) und einen mit dem sequentiellen Abschnitt (10a) kooperierenden kombinatorischen Abschnitt (10b) umfasst, und

das Verfahren weiter die Schritte umfasst:

- Liefern der primären Eingangssignale an erste Eingänge (x0, x1, x2) des sequentiellen Abschnitts;

- Bereitstellen, an zweiten Ausgängen (e0, e1, e2, e3) des sequentiellen Abschnitts, von sekundären Ausgangssignalen (E0, E1, E2, E3), und Liefern der sekundären Ausgangssignale (E0, E1, E2, E3) an jeweilige zweite Eingänge (y0, y1, y2, y3) des sequentiellen Abschnitts; und

- Bereitstellen der sekundären Ausgangssignale (E0, E1, E2, E3) an Eingänge des kombinatorischen Abschnitts, der erste Ausgänge (z0, z1, z2) aufweist, die die primären Ausgangssignale (Z2, Z1, Z0) liefern.

25. Verfahren nach Anspruch 24, **dadurch gekennzeichnet, dass** das sequentielle Netz dazu angeordnet ist, in Antwort auf eine Sequenz von primären Eingangssignalen (X2, X1, X0), die sich von der vorgegebenen Sequenz unterscheiden, in einen internen Zustand gesetzt zu werden, in dem die primären Ausgangssignale (Z2, Z1, Z0) es unmöglich machen, die Vorrichtung (Di) zu aktivieren (33, 35).

26. Das Verfahren nach Anspruch 24 oder 25, **dadurch gekennzeichnet, dass** es einen Testschritt (120, 140) umfasst, um einen ordnungsgemäßen Betrieb (134) des sequentiellen Netzes (10) und einen fehlerhaften Betrieb (125) des sequentiellen Netzes (10) selbst zu erfassen.

27. Verfahren nach Anspruch 26, **dadurch gekennzeichnet, dass** der Testschritt (120, 140) die Schritte umfasst:

- Erzwingen eines Übergangs (121, 124, 128, 131) primärer Eingangssignale des Netzes (10);

- Überprüfen (123, 127, 130a, 133), folgend der Beendigung des Übergangs, ob der durchgeführte Übergang in dem Netz (10) eine vorgegebene interne Zustandsveränderung realisiert.

28. Verfahren nach Anspruch 27, wobei das sequentielle Netz (10) eine Mehrzahl sekundärer Eingänge (y0, y1, y2, y3) aufweist, **dadurch gekennzeichnet, dass** während des Prüf schritts (123, 127, 130a, 133) kontrolliert wird, ob der durchgeführte Übergang eine vorgegebene Veränderung von an den sekundären Eingängen anliegenden sekundären Eingangssignalen (Y0, Y1, Y2, Y3) bewirkt hat.

29. Verfahren nach Anspruch 27 oder 28, **dadurch gekennzeichnet, dass** es eine Mehrzahl von Verzögerungsschritten (112, 126, 129, 132) umfasst, von denen jeder zwischen einem jeweiligen Erzwingungsschritt und einem Prüfschritt durchgeführt wird.

30. Verfahren nach einem der vorhergehenden Ansprüche 26 bis 29, **dadurch gekennzeichnet, dass** es einen internen Ruheprüfschritt (110) umfasst, um einen Ruhezustand des sequentiellen Netzes (10) zu erkennen, in dem primäre Ausgaben alle Null sind (Z0 = 0, Z1 = 0, Z2 = 0) und gleichzeitig alle an zweiten Ausgängen des sequentiellen Netzes (10) anliegenden Anregungssignale ebenso Null sind (E0 = 0; E1 = 0; E2 = 0);
wobei der Testschritt (120) durchgeführt wird, wenn der Ruheprüfschritt (110) den Ruhezustand erfasst;
wobei das Verfahren weiter einen Schritt zur Erfassung einer Fehlerbedingung (135) umfasst, wenn der Ruhezustand nicht erfasst wird.

31. Verfahren nach Anspruch 30, **dadurch gekennzeichnet, dass** es den Schritt eines Zwingens des Netzes in den Ruhezustand umfasst, falls der Ruhezustand nicht erfasst wurde.

32. Verfahren nach einem der vorhergehenden Ansprüche 24 bis 31, wobei eine Ansteuereinrichtung (33, 35) der physikalischen Vorrichtung (Di) zwischen dem sequentiellen Netz (10) und der physikalischen Vorrichtung selbst bereitgestellt ist, **dadurch gekennzeichnet, dass** es einen zweiten Testschritt (150, 160) umfasst, um einen ordnungsgemäßen Betrieb (159b) der Ansteuereinrichtung (33, 35) und einen fehlerhaften Betrieb (155) der Ansteuereinrichtung (33, 35) selbst zu erfassen.

33. Verfahren nach Anspruch 32, **dadurch gekennzeichnet, dass** der zweite Testschritt (150, 160) einen Schritt umfasst, um das sequentielle Netz (10) in einen internen Testzustand zu bringen (151, 157), in dem primäre Ausgangssignale geliefert werden, die dazu angeordnet sind, die Ansteuereinrichtung (33, 35) in einen Betriebszustand zu bringen, in dem es möglich ist, einen Steuerbetrieb (154, 159) der Ansteuereinrichtung (33, 35) ohne eine Realisierung der Aktivierung der Vorrichtung (D) zu realisieren.

34. Verfahren nach Anspruch 33, **dadurch gekennzeichnet, dass** die Ansteuereinrichtung umfasst:

   - mindestens zwei Module (M1, M2), von denen jedes eine mit mindestens zwei physikalischen Vorrichtungen (D1, D2) verknüpft ist, wobei jede dieser mit einem jeweiligen Kanal (CH1, CH2) in Verbindung steht;

   - eine Modulauswahlvorrichtung (33), um mindestens eines der mindestens zwei Module auszuwählen;

   - eine Kanalauswahlvorrichtung (5), um mindestens einen der mindestens zwei Kanäle (CH1, CH2) auszuwählen;
     wobei das Verfahren die Schritte umfasst:

   - Bringen (151) des sequentiellen Netzes (10) in einen ersten internen Testzustand ((3)), in dem primäre Ausgangssignale bereitgestellt werden, die dazu angeordnet sind, nur die Modulauswahlvorrichtung (33) zu aktivieren, was einen Steuerbetrieb (153, 154) der Modulauswahlvorrichtung (33) selbst möglich macht; und

   - Bringen (157) des sequentiellen Netzes (10) in einen zweiten internen Testzustand ((5)), in dem primäre Ausgangssignale bereitgestellt werden, die dazu angeordnet sind, nur die Kanalauswahlvorrichtung (35) zu aktivieren, was es möglich macht, einen Steuerbetrieb (158, 159) der Kanalauswahlvorrichtung (35) selbst durchzuführen.

35. Verfahren nach einem der Ansprüche 24 bis 34, **dadurch gekennzeichnet, dass** es einen Bestätigungsanforderungsschritt (170, 180) umfasst, um eine Bestätigungsanfragenachricht (msg-conf) zu erzeugen (170), die zur Zentraleinheit (2) gesendet wird (180); wobei das Verfahren einen Abhörschritt (190, 200, 210) umfasst, um eine Antwortnachricht (msg-risp) auf die Bestätigungsanfragenachricht von der Zentraleinheit (2) zu erfassen; wobei der Abhörschritt (190, 200, 210) dazu angeordnet ist, den Betrieb der Telesteuerung zu erlauben, falls die Antwortnachricht in einer vorgegebenen Beziehung zu der Bestätigungsanfragenachricht steht, und um den Betrieb der Telesteuerung (1) zu verhindern, falls die Antwortnachricht nicht die vorgegebene Beziehung erfüllt.

36. Verfahren nach einem der vorhergehenden Ansprüche 24 bis 35, **dadurch gekennzeichnet, dass** es einen Voraktivierungsschritt (220) umfasst, um das sequentielle Netz (10) in einen internen Voraktivierungszustand ((7)) zu bringen; wobei da sequentielle Netz (10) dazu angeordnet ist, einen einzelnen Übergang (270) von dem Voraktivierungszustand ((7)) in den Aktivierungszustand ((8)) folgend einer vorgegebenen Veränderung primärer Eingänge durchzuführen.

37. Verfahren nach einem der vorhergehenden Ansprüche 24 bis 36, **dadurch gekennzeichnet, dass** jeder erste Ausgang ($z2$, $z1$, $z0$) des sequentiellen Netzes (10) einer jeweiligen Schaltvorrichtung (27, 26, 25) zugeordnet ist, dazu angeordnet, für einen ersten logischen Wert ("0") des an einem jeweiligen ersten Ausgang anliegenden primären Ausgangssignals offengehalten zu werden, und dazu angeordnet, für einen zweiten logischen Wert ("1") des an dem ersten Ausgang anliegenden primären Ausgangssignals geschlossen zu werden; wobei das sequentielle Netz in seinem internen Aktivierungszustand (8) primäre Ausgangssignale erzeugt, die alle gleich dem zweiten logischen Wert ("1") für die Schließung aller Schaltvorrichtungen (25, 26, 27) sind; wobei das sequentielle Netz folgend einem internen Zustand, der sich von dem internen Aktivierungszustand (8) unterscheidet, mindestens ein primäres Ausgangssignal erzeugt, das gleich dem ersten logischen Wert ("0") ist, um mindestens eine Schaltvorrichtung (25, 26, 27) offen zu halten;
wobei die Schaltvorrichtungen (25, 26, 27) mit mindestens einer physikalischen Vorrichtung (D) kooperieren, um es unmöglich zu machen, die physikalische Vorrichtung selbst zu aktivieren, wenn mindestens eine der Schaltvorrichtungen offen ist.

38. Verfahren nach einem der vorhergehenden Ansprüche 24 bis 37, **dadurch gekennzeichnet, dass** es einen ersten Sicherheitsschritt (12) umfasst, mit den Unterschritten:

   - Erfassen der Zustandsübergänge primärer Eingangssignale (X0, X1, X2);

   - Erfassen der Zustandsübergänge primärer Ausgangssignale (Z0, Z1, Z2);

   - die Zustandsübergänge primärer Ausgangssignale als akzeptabel zu erachten, die folgend Zustandsübergängen von primären Eingangssignalen auftreten;

   - Erfassen einer Netzfehlfunktionssituation, falls ein Zustandsübergang primärer Ausgangssignale (Z0, Z1, Z2) ohne einen vorhergehenden Zustandsübergang primärer Eingangssignale (X0, X1, X2) auftritt.

39. Verfahren nach Anspruch 38, **dadurch gekennzeichnet, dass** es den Schritt zur Bewirkung der Deaktivierung der Peripherieeinheit (4) mit der folgenden Unmöglichkeit einer Aktivierung der Vorrichtung (Di) folgend einer erfassten Fehlfunktionssituation des Netzes umfasst.

40. Verfahren nach einem der vorhergehenden Ansprüche 24 bis 39, **dadurch gekennzeichnet, dass** es einen zweiten Sicherheitsschritt (12) umfasst, mit den Unterschritten:

   - Erfassen primärer Aktivierungssignale (X2 = 1; X1 = 0; X0 = 1) für die bereitgestellt ist, dass das sequentielle Netz (10) in seinen Aktivierungszustand geht;

   - Erfassen, ob, wenn primäre Aktivierungssignale (X2 = 1; X1 = 1; X1 = 0) vorliegen, die sekundären Eingangssignale einen ersten vorgegebenen Wert (Y3 = 1, Y2 = 1; Y1 = 1; Y0 = 1) entsprechend einem instabilen Netzaktivierungszustand (8) aufweisen, oder einen zweiten vorgegebenen Wert (Y3 = 0, Y2 = 1; Y1 = 1; Y0 = 1) entsprechend dem stabilen Netzaktivierungszustand ((8)); und

   - Erfassen einer gravierenden Fehlersituation, falls bei Erfassung solcher primärer Aktivierungseingangssignale sekundäre Eingangssignale erfasst werden, deren Wert sich von dem ersten vorgegebenen Wert und dem zweiten vorgegebenen Wert unterscheiden.

41. Verfahren nach Anspruch 40, **dadurch gekennzeichnet, dass** es einen Schritt zur Deaktivierung der Peripherieeinheit (4) mit der folgenden Unmöglichkeit einer Aktivierung der Vorrichtung (Di) umfasst, falls der gravierende Fehler erfasst wurde.

42. Verfahren nach einem der Ansprüche 24 bis 41, **dadurch gekennzeichnet, dass** es einen dritten Sicherheitsschritt (12) umfasst, mit den Unterschritten:

   - Erfassen primärer Aktivierungsausgangssignale (Z2 = 1; Z1 = 1; Z0 = 1), für die die Aktivierung der Vorrichtung (Di) gesteuert wird;

   - Erfassen, ob, wenn solche primären Aktivierungsausgangssignale (Z2 = 1; Z1 = 1; Z0 = 1) vorliegen, die primären Eingangssignale einen für die Aktivierung bereitgestellten vorgegeben Wert aufweisen (X2 = 1; X1 = 1; X0 = 1); und

   - Erfassen einer Fehlersituation, wenn bei Erfassung solcher Aktivierungsausgangssignale primäre Eingangssignale erfasst, werden, deren Wert sich von dem Wert unterscheidet, für die die Aktivierung gesteuert wird.

43. Verfahren nach Anspruch 42, **dadurch gekennzeichnet, dass** es einen Schritt zur Bewirkung der Steuerungsdeaktivierung für die Vorrichtung (Di) umfasst, falls der Fehler erfasst wurde.

**Revendications**

1. Dispositif de télécommande dans lequel une unité centrale (2) communique avec au moins une unité périphérique (4) ; ladite unité périphérique (4) commandant (33, 35) au moins un dispositif physique (Di),

   **caractérisé en ce que** ladite unité périphérique comprend au moins une unité centrale locale (12) et au moins un réseau séquentiel (10) possédant des premières entrées (x0, x1, x2) conçues pour recevoir des signaux d'entrée principaux (X2, X1, X0) générés par ladite unité centrale locale (12) ; ledit réseau séquentiel (10) possédant des premières sorties (z0, z1, z2) délivrant des signaux de sortie principaux (Z2, Z1, Z0) pour commander (33, 35) ledit dispositif physique (Di) ;

   ledit réseau séquentiel (10) étant conçu pour être mis, en réponse à une séquence prédéfinie de signaux d'entrée principaux (X2, X1, X0), dans un état d'activation interne ((8)) dans lequel des signaux de sortie principaux (Z2, Z1, Z0) sont générés pour activer (33, 35) ledit dispositif (Di) ;

   ledit réseau séquentiel (10) comprenant une partie séquentielle (10a) et une partie combinatoire (10b) coopérant avec la partie séquentielle (10a) ;

   ladite partie séquentielle (10a) possédant :

   - des premières entrées (x2, x1, x0) au niveau desquelles lesdits signaux d'entrée principaux (X2, X1, X0) sont présents, en provenance de ladite unité centrale locale (12) ; et
   - une pluralité de secondes sorties (e0, e1, e2, e3) au niveau desquelles des signaux de sortie secondaires respectifs (E0, E1, E2, E3) sont présents, qui sont transférés, par l'intermédiaire de boucles de réaction (13), vers des secondes entrées respectives de ladite partie séquentielle (10a) au niveau de laquelle des signaux d'entrée secondaires (Y0, Y1, Y2, Y3) sont présents ;

   lesdites secondes sorties (e0, e1, e2, e3) de ladite partie séquentielle (10a) communiquant avec des entrées de la partie combinatoire (10b) pour délivrer des signaux de sortie secondaires (E0, E1, E2, E3) à l'entrée de la partie combinatoire (10b) qui délivre en tant que sortie lesdits signaux de sortie principaux (Z2, Z1, Z0).

2. Dispositif selon la revendication 1, **caractérisé en ce que** ladite partie combinatoire (10b) comprend une pluralité de relais forcés-guidés dont chacun comprend une pluralité de contacts mobiles reliés mécaniquement les uns aux autres.

3. Dispositif selon la revendication 1, **caractérisé en ce que** ledit réseau séquentiel est conçu pour être mis, en réponse à une séquence de signaux d'entrée principaux (X2, X1, X0) différente de ladite séquence prédéfinie, dans un état interne dans lequel les signaux de sortie principaux (Z2, Z1, Z0) rendent impossible l'activation (33, 35) dudit dispositif (Di).

4. Dispositif selon la revendication 1 ou 2, **caractérisé en ce qu'**il comprend des premiers moyens de test (120, 140) conçus pour détecter un fonctionnement correct (134) dudit réseau séquentiel (10) et un fonctionnement défectueux (125) dudit réseau séquentiel (10) lui-même.

5. Dispositif selon la revendication 4, **caractérisé en ce que** de tels premiers moyens de test (120, 140) comprennent :

   - des moyens de forçage (121, 124, 128, 131) dont chacun est conçu pour réaliser une transition des signaux d'entrée principaux dudit réseau (10) ;

   des moyens de commande (123, 127, 130a, 133) dont chacun peut être activé suite à l'achèvement de la transition exécutée par un moyen de forçage respectif et est conçu pour vérifier si la transition a exécuté, dans ledit réseau (10), une variation d'état interne prédéfinie.

6. Dispositif selon la revendication 5, dans lequel ledit réseau séquentiel (10) possède une pluralité d'entrées secondaires (y0, y1, y2, y3), **caractérisé en ce que** chaque moyen de commande (123, 127, 130a, 133) est conçu pour vérifier si la transition exécutée par les moyens de forçage respectifs a réalisé une variation prédéfinie des signaux d'entrée secondaires (Y0, Y1, Y2, Y3) présents aux dites entrées secondaires.

7. Dispositif selon la revendication 5 ou 6, **caractérisé en ce qu'**il comprend une pluralité de moyens de retard (122, 126, 129, 132) dont chacun est intercalé entre un moyen de forçage respectif et un moyen de commande et peut être activé suite à l'achèvement de la transition des entrées principales dudit réseau (10) exécutée par lesdits moyens de forçage.

**8.** Dispositif selon l'une quelconque des revendications 4 à 7, **caractérisé en ce qu'**il comprend des moyens de vérification (110) qui peuvent être sélectionnés suite à l'activation (100) de ladite télécommande (1) et conçus pour vérifier un état de repos dudit réseau séquentiel (10) dans lequel toutes les entrées principales sont nulles (Z0 = 0 ; Z1 = 0 ; Z2 = 0) et, simultanément, tous les signaux d'excitation présents aux entrées secondaires d'un tel réseau séquentiel (10) sont également nuls (E0 = 0 ; E1 = 0 ; E2 = 0 ; E3 = 0) ;

lesdits moyens de vérification (110) étant conçus pour activer lesdits premiers moyens de test (120) lors de la détection dudit état de repos et étant en outre conçus pour détecter une condition d'erreur (135) si ledit état de repos n'est pas détecté suite à l'activation dudit dispositif de télécommande.

**9.** Dispositif selon la revendication 8, **caractérisé en ce qu'**il comprend des moyens de réinitialisation (130) qui peuvent être sélectionnés par lesdits moyens de vérification (110) lorsque ledit état de repos n'a pas été détecté ; lesdits moyens de réinitialisation (130) étant conçus pour forcer ledit réseau à un tel état de repos.

**10.** Dispositif selon l'une quelconque des revendications précédentes, dans lequel des moyens de pilotage (33, 35) sont fournis pour un tel dispositif physique (Di) intercalés entre ledit réseau séquentiel (10) et le dispositif physique lui-même, **caractérisé en ce qu'**il comprend des seconds moyens de test (150, 160) conçus pour détecter un fonctionnement correct (159b) desdits moyens de pilotage (33, 35) et un fonctionnement défaillant (155) des moyens de pilotage (33, 35) eux-mêmes.

**11.** Dispositif selon la revendication 10, **caractérisé en ce que** lesdits seconds moyens de test (150, 160) comprennent :

-   des moyens de commande de transition (151, 157) conçus pour amener ledit réseau séquentiel (10) à un état de test interne, dans lequel des signaux de sortie principaux sont délivrés pour amener lesdits moyens de pilotage (33, 35) à un état de fonctionnement dans lequel il est possible de réaliser une opération de commande (154, 159) des moyens de pilotage (33, 35) eux-mêmes sans effectuer l'activation dudit dispositif (D).

**12.** Dispositif selon la revendication 11, **caractérisé en ce que** lesdits moyens de pilotage comprennent :

-   au moins deux modules (M1, M2) dont chacun est associé à au moins deux dispositifs physiques (D1, D2) dont chacun est lié à un canal respectif (CH1, CH2) ;
-   un dispositif de sélection de module (33) pour la sélection d'au moins l'un desdits deux modules ;
-   un dispositif de sélection de canal (35) pour la sélection d'au moins l'un desdits deux canaux (CH1, CH2) ;

lesdits moyens de commande de transition (151, 157) comprenant :

-   des premiers moyens de commande de transition (151) conçus pour amener ledit réseau séquentiel (10) à un premier état de test interne ((3)) dans lequel des signaux de sortie principaux sont délivrés pour activer uniquement ledit dispositif de sélection de module (33) et permettre l'exécution d'une opération de commande (153, 154) du dispositif de sélection de module (33) ; et
-   des seconds moyens de commande de transition (157) conçus pour amener ledit réseau séquentiel (10) à un second état de test interne ((5)) dans lequel des signaux de sortie principaux sont délivrés pour activer uniquement ledit dispositif de sélection de canal (35) et permettre l'exécution d'une opération de commande (158, 159) du dispositif de sélection de canal (35) lui-même.

**13.** Dispositif selon l'une quelconque des revendications précédentes, **caractérisé en ce qu'**il comprend des moyens de demande de confirmation (170, 180) conçus pour créer (170) un message de demande de confirmation (msg-conf) et conçus pour envoyer (180) ledit message de demande de confirmation à ladite unité centrale (2) ; lesdits moyens de demande de confirmation (170, 180) coopérant avec des moyens d'écoute (190, 200, 210) pour détecter un message de réponse (msg-risp) au dit message de demande de confirmation provenant de ladite unité centrale (2) ;

lesdits moyens d'écoute (190, 200, 210) étant conçus pour permettre les opérations dudit dispositif de télécommande lorsque ledit message de réponse est dans une relation prédéfinie avec ledit message de demande de confirmation et pour empêcher les opérations dudit dispositif de télécommande (1) si ledit message de réponse ne satisfait pas ladite relation prédéfinie.

**14.** Dispositif selon la revendication 13 en tant qu'elle dépend de la revendication 9, **caractérisé en ce que** lesdits moyens de demande de confirmation (170, 180) peuvent être sélectionnés si lesdits seconds moyens de test (150) détectent un fonctionnement correct (159b) desdits moyens de pilotage (33, 35).

**15.** Dispositif selon l'une quelconque des revendications précédentes, **caractérisé en ce qu'**il comprend des moyens de pré-activation (220) conçus pour amener ledit réseau séquentiel (10) à un état de pré-activation interne ((7)) ; ledit réseau séquentiel (10) étant conçu pour exécuter une seule transition (270) à partir dudit état de pré-activation ((7)) en ledit état d'activation ((8)) suite à une variation prédéfinie des entrées principales.

**16.** Dispositif selon la revendication 15, **caractérisé en ce que** lesdits moyens de pré-activation (220) sont associés à d'autres moyens de demande de confirmation (240, 250) conçus pour envoyer (240) un autre message de demande de confirmation à ladite unité centrale (2) ; lesdits autres moyens de demande de confirmation (240, 250) coopérant avec d'autres moyens d'écoute (260) pour détecter un autre message de réponse au dit autre message de demande provenant de ladite unité centrale (2) ;

lesdits autres moyens d'écoute (260) étant conçus pour permettre une transition suivante dudit réseau séquentiel (10) depuis ledit état de pré-activation en ledit état d'activation si ledit autre message de réponse a été au moins reçu.

**17.** Dispositif selon l'une quelconque des revendications précédentes, **caractérisé en ce que** chaque première sortie (z2, z1, z0) dudit réseau séquentiel (10) est associée à un dispositif de commutation respectif (27, 26, 25) conçu pour être maintenu ouvert pour une première valeur logique (« 0 ») du signal de sortie principal présent à une première sortie respective et conçu pour être fermé pour une seconde valeur logique (« 1 ») du signal de sortie principal présent à la première sortie ;

ledit réseau séquentiel produisant, dans son état d'activation interne (8), des signaux de sortie principaux tous égaux à la seconde valeur logique (« 1 ») pour la fermeture de tous lesdits dispositifs de commutation (25, 26, 27) ;

ledit réseau séquentiel produisant, à un état interne différent de l'état d'activation interne (8), au moins un signal de sortie principal égal à la première valeur logique (« 0 ») pour maintenir au moins un dispositif de commutation (25, 26, 27) ouvert ;

lesdits dispositifs de commutation (25, 26, 27) coopérant avec ledit au moins un dispositif physique (D) pour rendre impossible l'activation du dispositif physique lui-même lorsque au moins l'un desdits commutateurs est ouvert.

**18.** Dispositif selon l'une quelconque des revendications précédentes, **caractérisé en ce qu'**il comprend des premiers moyens auxiliaires de sécurité (12) conçus pour :

- détecter les transitions d'état des signaux d'entrée principaux (X0, X1, X2) ;
- détecter les transitions d'état des signaux de sortie principaux (Z0, Z1, Z2) ;
- estimer comme acceptables les transitions d'état des signaux de sortie principaux survenues après les transitions d'état des signaux d'entrée principaux ;
- détecter une situation de défaillance du réseau si une transition d'état des signaux de sortie principaux (Z0, Z1, Z2) survient sans transition d'état précédente des signaux d'entrée principaux (X0, X1, X2).

**19.** Dispositif selon la revendication 18, **caractérisé en ce qu'**il comprend des moyens (12) conçus pour produire la désactivation de ladite unité périphérique (4) avec l'impossibilité ultérieure d'activer ledit dispositif (Di) en cas de situation de défaillance détectée du réseau.

**20.** Dispositif selon l'une quelconque des revendications précédentes, **caractérisé en ce qu'**il comprend des moyens de sécurité auxiliaires secondaires (12) conçus pour :

- détecter des signaux d'entrée d'activation principaux (X2 = 1 ; X1 = 1 ; et X0 = 1) pour lesquels il est déterminé que le réseau séquentiel (10) est mis dans l'état d'activation ;
- détecter si lorsque de tels signaux d'entrée d'activation principaux (X2 = 1 ; X1 = 1 ; X0 = 1) sont présents des signaux d'entrée secondaires possèdent une valeur prédéfinie (Y3 = 1 ; Y2 = 1 ; Y1 = 1 ; Y0 = 1), correspondant à un état instable de pré-activation du réseau (8), ou une seconde valeur prédéfinie (Y3 = 0 ; Y2 = 1 ; Y1 = 1 ; Y0 = 1), correspondant à l'état stable d'activation du réseau ((8)) ; et
- détecter une situation d'erreur fatale si, lors de la détection de tels signaux d'activation d'entrée principaux, des signaux d'entrée secondaires sont détectés possédant une valeur différente de la première valeur prédéfinie et de la seconde valeur prédéfinie.

21. Dispositif selon la revendication 20, **caractérisé en ce qu'**il comprend des moyens (12) conçus pour produire la désactivation de ladite unité périphérique (4) avec l'activation impossible résultante dudit dispositif (Di) suite à ladite erreur fatale détectée.

22. Dispositif selon l'une quelconque des revendications précédentes, **caractérisé en ce qu'**il comprend des troisièmes moyens auxiliaires de sécurité (12) conçus pour :

   - détecter des signaux de sortie d'activation principaux (Z2 = 1 ; Z1 = 1 ; Z0 = 1) pour lesquels l'activation du dispositif (Di) est commandée ;
   - détecter si lorsque de tels signaux de sortie principaux (Z2 = 1 ; Z1 = 1 ; Z0 = 1) sont présents les signaux d'entrée principaux possèdent une valeur prédéfinie délivrée pour l'activation (X2 = 1 ; X1 = 1 ; X0 = 1) ; et
   - détecter une situation d'erreur si, lors de la détection de tels signaux de sortie d'activation principaux, des signaux d'entrée principaux sont détectés dont la valeur est différente de la valeur prédéfinie délivrée pour l'activation.

23. Dispositif selon la revendication 22, **caractérisé en ce qu'**il comprend des moyens (12) conçus pour générer la désactivation de commande dudit dispositif (Di) suite à ladite erreur détectée.

24. Procédé de télécommande, dans lequel une unité centrale (2) communique avec au moins une unité périphérique (4) ; ladite unité périphérique (4) étant conçue pour commander (33, 35) au moins un dispositif physique (Di), **caractérisé en ce qu'**il comprend les étapes suivantes :

   - délivrer (12) des signaux d'entrée principaux (X2, X1, X0) à des premières entrées (x0, x1, x2) d'un réseau séquentiel (10) ;
   - prendre aux premières sorties (z0, z1, z2) dudit réseau séquentiel des signaux de sortie principaux (Z2, Z1, Z0) pour la commande (33, 35) dudit dispositif (Di) ;

   ledit réseau séquentiel (10) étant conçu pour être mis, en réponse à une séquence prédéfinie de signaux d'entrée principaux (X2, X1, X0), dans un état d'activation interne ((8)) dans lequel des signaux de sortie principaux (Z2, Z1, Z0) sont générés pour activer (33, 35) ledit dispositif physique (Di) ;
   ledit réseau séquentiel (10) comprenant une partie séquentielle (10a) et une partie combinatoire (10b) coopérant avec la partie séquentielle (10a) ;
   ledit procédé comprenant en outre les étapes consistant à :

   - délivrer lesdits signaux d'entrée principaux aux premières entrées (x0, x1, x2) de ladite partie séquentielle ;
   - délivrer aux secondes sorties (e0, e1, e2, e3) de ladite partie séquentielle des signaux de sortie secondaires (E0, E1, E2, E3) et délivrer lesdits signaux de sortie secondaires (E0, E1, E2, E3) aux secondes entrées respectives (Y0, Y1, Y2, Y3) de ladite partie séquentielle ; et
   délivrer lesdits signaux de sortie secondaires (E0, E1, E2, E3) aux entrées de la partie combinatoire dont les premières sorties (z0, z1, z2) délivrent lesdits signaux de sortie principaux (Z2, Z1, Z0).

25. Procédé selon la revendication 24, **caractérisé en ce que** ledit réseau séquentiel est conçu pour être mis, en réponse à une séquence de signaux d'entrée principaux (X2, X1, X0) différente de ladite séquence prédéfinie, dans un état interne dans lequel les signaux de sortie principaux (Z2, Z1, Z0) rendent impossible l'activation (33, 35) dudit dispositif (Di).

26. Procédé selon la revendication 24 ou 25, **caractérisé en ce qu'**il comprend une étape de test (120, 140) pour détecter un fonctionnement correct (134) dudit réseau séquentiel (10) et un fonctionnement défectueux (125) du réseau séquentiel (10) lui-même.

27. Procédé selon la revendication 26, **caractérisé en ce que** ladite étape de test (120, 140) comprend les étapes consistant à :

   - forcer une transition (121, 124, 128, 131) des signaux d'entrée principaux dudit réseau (10) ;
   - vérifier (123, 127, 130a, 133), suite à l'achèvement de ladite transition, si la transition exécutée a réalisé, dans ledit réseau (10), une variation d'état interne prédéfinie.

**28.** Procédé selon la revendication 27, dans lequel ledit réseau séquentiel (10) possède une pluralité d'entrées secondaires (y0, y1, y2, y3) **caractérisé en ce que** pendant ladite étape de vérification (123, 127, 130a, 133) il est contrôlé si la transition exécutée a réalisé une variation prédéfinie des signaux d'entrée secondaires (Y0, Y1, Y2, Y3) présents aux dites entrées secondaires.

**29.** Procédé selon la revendication 27 ou 28, **caractérisé en ce qu'**il comprend une pluralité d'étapes de retard (122, 126, 129, 132) dont chacune est exécutée entre une étape de forçage respective et une étape de vérification.

**30.** Procédé selon l'une quelconque des revendications précédentes 26 à 29, **caractérisé en ce qu'**il comprend une étape initiale de vérification de repos (110) pour reconnaître un état de repos dudit réseau séquentiel (10) dans lequel des sorties principales sont toutes nulles (Z0 = 0 ; Z1 = 0 ; Z2 = 0) et, simultanément, tous les signaux d'excitation présents aux secondes sorties dudit réseau séquentiel (10) sont également nuls (E0 = 0 ; E1 = 0 ; E2 = 0) ;

ladite étape de test (120) étant exécutée si ladite étape de vérification de repos (110) détecte ledit état de repos ;

ledit procédé comprenant en outre l'étape de détection d'une condition d'erreur (135) lorsque ledit état: de repos n'est pas détecté.

**31.** Procédé selon la revendication 30, **caractérisé en ce qu'**il comprend l'étape consistant à forcer ledit réseau en ledit état de repos si ledit état de repos n'a pas été détecté.

**32.** Procédé selon l'une quelconque des revendications précédentes 24 à 31, dans lequel des moyens de pilotage (33, 35) dudit dispositif physique (Di) sont fournis, intercalés entre ledit réseau séquentiel (10) et le dispositif physique lui-même, **caractérisé en ce qu'**il comprend une seconde étape de test (150, 160) pour détecter un fonctionnement correct (159b) desdits moyens de pilotage (33, 35) et un fonctionnement défectueux (155) des moyens de pilotage (33, 35) eux-mêmes.

**33.** Procédé selon la revendication 32, **caractérisé en ce que** ladite seconde étape de test (150, 160) comprend l'étape consistant à amener (151, 157) ledit réseau séquentiel (10) à un état de test interne dans lequel des signaux de sortie principaux sont délivrés, conçus pour amener lesdits moyens de pilotage (33, 35) à un état de fonctionnement dans lequel il est possible de réaliser une opération de commande (154, 159) desdits moyens de pilotage (33, 35) sans réaliser l'activation dudit dispositif (D).

**34.** Procédé selon la revendication 33, **caractérisé en ce que** lesdits moyens de pilotage comprennent :

- au moins deux modules (M1, M2) dont chacun est associé à au moins deux dispositifs physiques (D1, D2) dont chacun est lié à un canal respectif (CH1, CH2) ;
- un dispositif de sélection de module (33) pour sélectionner au moins l'un parmi lesdits au moins deux modules ;
- un dispositif de sélection de canal (35) pour sélectionner au moins l'un parmi lesdits au moins deux canaux (CH1, CH2) ;

ledit procédé comprenant les étapes consistant à :

- amener (151) ledit réseau séquentiel (10) à un premier état de test interne ((3)) dans lequel des signaux de sortie principaux sont délivrés, conçus pour activer uniquement ledit dispositif de sélection de module (33) et rendre possible une opération de commande (153, 154) du dispositif de sélection de module (33) lui-même ; et
- amener (157) ledit réseau séquentiel (10) à un second état de test interne ((5)) dans lequel des signaux de sortie principaux sont délivrés, conçus pour activer uniquement ledit dispositif de sélection de canal (35) et rendre possible l'exécution d'une opération de commande (158, 159) du dispositif de sélection de canal (35) lui-même.

**35.** Procédé selon l'une quelconque des revendications 24 à 34, **caractérisé en ce qu'**il comprend une étape de demande de confirmation (170, 180) pour créer (170) un message de demande de confirmation (msg-conf) envoyé (180) à ladite unité centrale (2) ; ledit procédé comprenant une étape d'écoute (190, 200, 210) pour détecter un message de réponse (msg-risp) au dit message de demande de confirmation provenant de ladite unité centrale (2) ;

ladite étape d'écoute (190, 200, 210) étant conçue pour permettre les opérations de télécommande si ledit message de réponse est dans une relation prédéfinie avec ledit message de demande de confirmation et pour empêcher les opérations de télécommande (1) si ledit message de réponse ne satisfait pas ladite relation prédéfinie.

**36.** Procédé selon l'une quelconque des revendications précédentes 24 à 35, **caractérisé en ce qu'**il comprend une étape de pré-activation (220) pour amener ledit réseau séquentiel (10) à un état de pré-activation interne ((7)) ; ledit réseau séquentiel (10) étant conçu pour exécuter une seule transition (270) depuis ledit état de pré-activation ((7)) en ledit état d'activation ((8)) suite à une variation prédéfinie des entrées principales.

**37.** Procédé selon l'une quelconque des revendications précédentes 24 à 36, **caractérisé en ce que** chaque première entrée (z2, z1, z0) dudit réseau séquentiel (10) est associée à un dispositif de commutation respectif (27, 26, 25) conçu pour être maintenu ouvert pour une première valeur logique (« 0 ») du signal de sortie principal présent à une première sortie respective et conçu pour être fermé pour une seconde valeur logique (« 1 ») du signal de sortie principal présent à la première sortie ;

ledit réseau séquentiel produisant, dans son état d'activation interne (8), des signaux de sortie principaux tous égaux à la seconde valeur logique (« 1 ») pour la fermeture de tous lesdits dispositifs de commutation (25, 26, 27) ;

ledit réseau séquentiel produisant, suite à un état interne différent de l'état d'activation interne (8), au moins un signal de sortie principal égal à la première valeur logique (« 0 ») pour maintenir au moins un dispositif de commutation (25, 26, 27) ouvert ;

lesdits dispositifs de commutation (25, 26, 27) coopérant avec ledit au moins un dispositif physique (D) pour rendre impossible l'activation du dispositif physique lui-même lorsque au moins l'un desdits dispositifs de commutation est ouvert.

**38.** Procédé selon l'une quelconque des revendications précédentes 24 à 37, **caractérisé en ce qu'**il comprend une première étape de sécurité (12) comprenant les étapes secondaires consistant à :

- détecter les transitions d'état des signaux d'entrée principaux (X0, X1, X2) ;
- détecter les transitions d'état des signaux de sortie principaux (Z0, Z1, Z2) ;
- estimer comme acceptables les transitions d'état des signaux de sortie principaux survenues suite à des transitions d'état des signaux d'entrée principaux ;
- détecter une situation de défaillance du réseau si une transition d'état des signaux de sortie principaux (Z0, Z1, Z2) survient sans une transition d'état précédente des signaux d'entrée principaux (X0, X1, X2).

**39.** Procédé selon la revendication 38, **caractérisé en ce qu'**il comprend l'étape consistant à générer la désactivation de ladite unité périphérique (4) avec l'impossibilité suivante d'activer ledit dispositif (Di) suite à une situation de défaillance détectée du réseau.

**40.** Procédé selon l'une quelconque des revendications précédentes 24 à 39, **caractérisé en ce qu'**il comprend une deuxième étape de sécurité (12) comprenant les étapes secondaires consistant à :

- détecter des signaux d'activation principaux (X2 = 1 ; X1 = 1 ; X0 = 1) pour lesquels il est déterminé que ledit réseau séquentiel (10) entre dans son état d'activation ;
- détecter si lorsque des signaux d'activation principaux (X2 = 1 ; X1 = 1 ; X0 = 1) sont présents les signaux d'entrée secondaires possèdent une première valeur prédéfinie (Y3 = 1 ; Y2 = 1 ; Y1 = 1 ; Y0 = 1), correspondant à un état instable d'activation du réseau (8), ou une seconde valeur prédéfinie (Y3 = 0 ; Y2 = 1 ; Y1 = 1 ; Y0 = 1), correspondant à l'état stable d'activation du réseau ((8)) ; et
- détecter une situation d'erreur fatale si, lors de la détection de tels signaux d'entrée d'activation principaux, des signaux d'entrée secondaires sont détectés dont la valeur est différente de la première valeur prédéfinie et de la seconde valeur prédéfinie.

**41.** Procédé selon la revendication 40, **caractérisé en ce qu'**il comprend une étape de désactivation de ladite unité périphérique (4) avec l'impossibilité suivante d'activer ledit dispositif (Di) si ladite erreur fatale a été détectée.

**42.** Procédé selon l'une quelconque des revendications 24 à 41, **caractérisé en ce qu'**il comprend une troisième étape de sécurité (12) comprenant les étapes secondaires consistant à :

- détecter des signaux de sortie d'activation principaux (Z2 = 1 ; Z1 = 1 ; Z0 = 1) pour lesquels l'activation du dispositif (Di) est commandée ;
- détecter si lorsque de tels signaux de sortie principaux d'activation (Z2 = 1 ; Z1 = 1 ; Z0 = 1) sont présents les signaux d'entrée principaux possèdent une valeur prédéfinie délivrée pour l'activation (X2 = 1 ; X1 = 1 ; X0 = 1) ; et

- détecter une situation d'erreur si, lors de la détection de tels signaux de sortie d'activation, des signaux d'entrée principaux sont détectés dont la valeur est différente de la valeur pour laquelle l'activation est commandée.

43. Procédé selon la revendication 42, **caractérisé en ce qu'**il comprend l'étape consistant à générer la désactivation de commande dudit dispositif (Di) si ladite erreur a été détectée.

Fig.1

Fig. 2a

Fig.2b

Fig.3

Fig.4

Fig. 5

EP 0 978 771 B1